Europäisches Patentamt

European Patent Office

Office européen des brevets

(19)

(11) EP 1 059 776 A1

(12) EUROPEAN PATENT APPLICATION

(43) Date of publication:
13.12.2000 Bulletin 2000/50

(51) Int Cl.7: H04L 12/56, H04L 29/06,
H04Q 7/22

(21) Application number: 99305107.7

(22) Date of filing: 09.06.1999

(84) Designated Contracting States:
AT BE CH CY DE DK ES FI FR GB GR IE IT LI LU
MC NL PT SE
Designated Extension States:
AL LT LV MK RO SI

(71) Applicant: LUCENT TECHNOLOGIES INC.
Murray Hill, New Jersey 07974-0636 (US)

(72) Inventors:
• Demetrescu, Christian
London TW2 5LY (GB)

• Samaras, Konstantinos
Swindon SN2 2HL (GB)
• Wu, Jian Jun
Lower Earley, Reading RG6 3AB (GB)

(74) Representative: Williams, David John et al
Lucent Technologies UK Limited,
5 Mornington Road
Woodford Green, Essex IG8 0TU (GB)

(54) Transmission of voice in an edge network

(57) There is disclosed a transmitter including a data encoder for encoding data packets in fixed length EDGE blocks. Each data packet includes a data header and a data payload. The transmitter additionally includes a speech encoder for encoding speech packets each including a speech header and a payload comprising a speech frame. The speech packets are encoded into blocks of equal length to the EDGE data blocks, the speech header being reduced relative to the data header.

FIG 3(a)

EP 1 059 776 A1

| 8 | 7 | 6 | 12 | 5 | 4 | 3 | 2 | 1 | 30 |
|---|---|---|---|---|---|---|---|---|---|

TFI (7 bits) — SF (2 bits)

SF | CCS (6 bits) | FBI (1 bit)

14      32      16

FIG 3(b)

## Description

### Field of the Invention

The present invention relates to the transmission of voice in a network designed to support the transmission of data according to the proposed enhanced data rate for GSM evolution (EDGE).

### Background to the Invention

Digital mobile communication systems for voice such as GSM (Global System for Mobile Communication), and DAMPS (Digital Advanced Mobile Systems) have expanded very rapidly in recent years.

In addition great demand for data service has been created by mobile users due to wide spread acceptance of the Internet. GPRS (General Packet Radio Service), EDGE (enhanced data rate for GSM), and UMTS (Universal Mobile Telecommunications Services) are all being developed to accommodate data users in wireless networks.

Schemes for the transmission of voice over fixed packet switch networks have also been developed in recent years and an increasing amount of voice traffic will be carried over packet switched networks in the future.

The enhanced data rate for GSM evolution (EDGE) is a proposal for the evolution of existing time division multiple access (TDMA) radio cellular systems in order to support higher transmission data rates and increase the capacity of these networks. The application of EDGE is restricted not only to GSM cellular networks but also has been accepted for the evolution of IS-136 systems by UWCC (Universal Wireless Communications Consortium). Enhanced data rates are achieved by introducing higher level modulation formats, such as 8-PSK (phase shift keying). With the introduction of such modulation schemes, EDGE systems can offer bit rates of up to approximately three times higher than standard GSM/GPRS/IS-136 systems.

EDGE was initially developed in order to provide data service at higher rates than GSM or GPRS, by making use of multi-phase modulation (such as 8-PSK) instead of binary GMSK. However, the structure of the proposed RLC/MAC blocks for data transmission do not allow for the efficient use of the available radio resources for voice transmission. Furthermore, due to the use of 8-PSK more powerful channel coding is required in order to maintain certain levels of voice quality .

It is therefore an object of the present invention to provide a method and apparatus for the efficient transmission of voice in an EDGE network.

### Summary of the Invention

In one aspect the present invention presents a transmitter including a data encoder for encoding data packets in fixed length EDGE blocks, each data packet including a data header and a data payload, wherein said transmitter additionally includes a speech encoder for encoding speech packets each including a speech header and a payload comprising a speech frame, wherein the speech packets are encoded into blocks of equal length to the EDGE data blocks, the speech header being reduced relative to the data header.

The speech header preferably includes temporary flow identity and final block indicator fields. The speech header preferably additionally includes error-checking information associated with the header for detecting errors in the speech header at the receiver. The error-checking information preferably allows for correction of errors in the speech header at the receiver. In a wireless network in the down-link the speech header preferably additionally includes an up-link state flag. In a wireless network in the up-link the speech header preferably additionally includes a speech flag.

The transmitter may further include a full-rate speech encoder for generating the speech frames. Preferably at least two speech frames are encoded into a block. The at least two speech frames are preferably encoded into a block without puncturing.

The transmitter may further include a half-rate speech encoder for generating the speech frames. At least four speech frames are preferably encoded into a block.

In another aspect the invention provides a packet switched radio network for encoding data packets including a data header and a data payload into fixed length EDGE blocks, a method of encoding speech frames comprising: generating a speech header for each speech frame; generating a speech packet for each speech frame including the speech header and a payload comprising the speech frame; encoding each speech packet into a block of equal length to the EDGE data block, wherein the speech header is reduced relative to the data header.

The method preferably comprises the step of generating each speech packet using a full-rate speech encoder. The method preferably comprises the step of generating each speech packet using a half-rate encoder. Preferably at least two speech packets are encoded into a block.

The invention will now be described by way of example with reference to the accompanying drawings, in which:

## Brief Description of the Figures

Figures 1(a) and (b) illustrate a first example of a header structure for transmitting voice over an EDGE network;

Figures 2(a) and (b) illustrate a second example of a header structure for transmitting voice over an EDGE network;

Figures 3(a) and (b) illustrate a third example of a header structure for transmitting voice over an EDGE network;

Figures 4(a) and (b) illustrates system performance improvements using the header of Figure 3;

Figure 5 illustrates an encoder for generating the header of Figure 3(a);

Figure 6 illustrates a decoder for decoding the header of Figure 3(a);

Figure 7 illustrates circuitry for generating an RLC/MAC block in the down-link of an EDGE system;

Figures 8(a) to 8(c) illustrate one embodiment of the generation of an RLC/MAC block from two speech frames from the same user in the down-link of an EDGE network utilising the circuit of Figure 7;

Figures 9(a) to 9(c) illustrate an embodiment, corresponding to the embodiment of Figure 8, for generating an RLC/MAC block in the up-link of an EDGE system;

Figures 10(a) to 10(e) illustrate one embodiment of the generation of an RLC/MAC block from four speech frames from different users in the down-link of an EDGE network;

Figures 11(a) to 11(e) illustrate an embodiment, corresponding to the embodiment of Figure 10, for generating an RLC/MAC block in the up-link of an EDGE system;

Figure 12 illustrates circuitry for generating an RLC/MAC block in the down-link of an EDGE system;

Figures 13(a) to 13(c) illustrate one embodiment of the generation of an RLC/MAC block from two speech frames from different users in the down-link of an EDGE network utilising the circuit of Figure 12;

Figures 14(a) to 14(c) illustrate an embodiment, corresponding to the embodiment of Figure 13, for generating an RLC/MAC block in the up-link of an EDGE system;

Figures 15(a) to (d) illustrate conventional interleaving techniques;

Figure 16 illustrates a preferable interleaving technique for the down-link of a wireless network;

Figure 17 illustrates a preferable interleaving technique for the up-link of a wireless network;

Figure 18 illustrates circuitry for generating an RLC/MAC block in the down-link of an EDGE system;

Figures 19(a) to 19(c) illustrate one embodiment of the generation of an RLC/MAC block from two speech frames from the same users in the down-link of an EDGE network utilising the circuit of Figure 18;

Figures 20(a) to 20(c) illustrate an embodiment, corresponding to the embodiment of Figure 19, for generating an RLC/MAC block in the up-link of an EDGE system;

Figure 21 illustrates a convnetional GSM/GPRS burst structure;

Figure 22 illustrates one embodiment of a preferable burst structure;

Figures 23(a) to 23(c) illustrate an embodiment, corresponding to the embodiment of Figure 19, for generating an RLC/MAC block in the up-link of an EDGE system;

Figure 24 illustrates another embodiment of a preferable burst structure; and

Figure 25 illustrates an example implementation of the preferable burst structures of Figures 22 and 24.

**Description of Preferred Embodiments**

The enhanced data rate for GSM evolution (EDGE) has been developed to support the transmission of data packets in wireless networks. Networks supporting the transmission of data packets are conventionally known as packet switched networks. In packet switched networks such as EDGE, the data is transmitted in data packets which include a header and a payload. Each data packet is encoded into a Radio Link Control/Medium Access Control (RLC/MAC) block. The payload includes the information portion of the data packet. The header includes control and routing information associated with the data packet. For example, the header usually includes the destination address of the data packet, error checking information, and control bits for enabling receipt of the packet to be acknowledged, and if necessary to request retransmission of the packet. One characteristic of data packet transmission is that if the receiver in the network does not successfully receive the transmitted packet, then retransmission of the data packet is requested.

In sending voice, as opposed to data, the requirements for transmission are different. For example, in voice transmission it is impractical for information to be re-transmitted because of time delay constraints. Therefore voice transmission in packet switched networks is unacknowledged voice packet transmission. In addition, with voice different bits of the encoded speech have different importance, and it is acceptable for certain bits to be lost. However in data every bit is assumed to have equal importance, and no bits should therefore be lost.

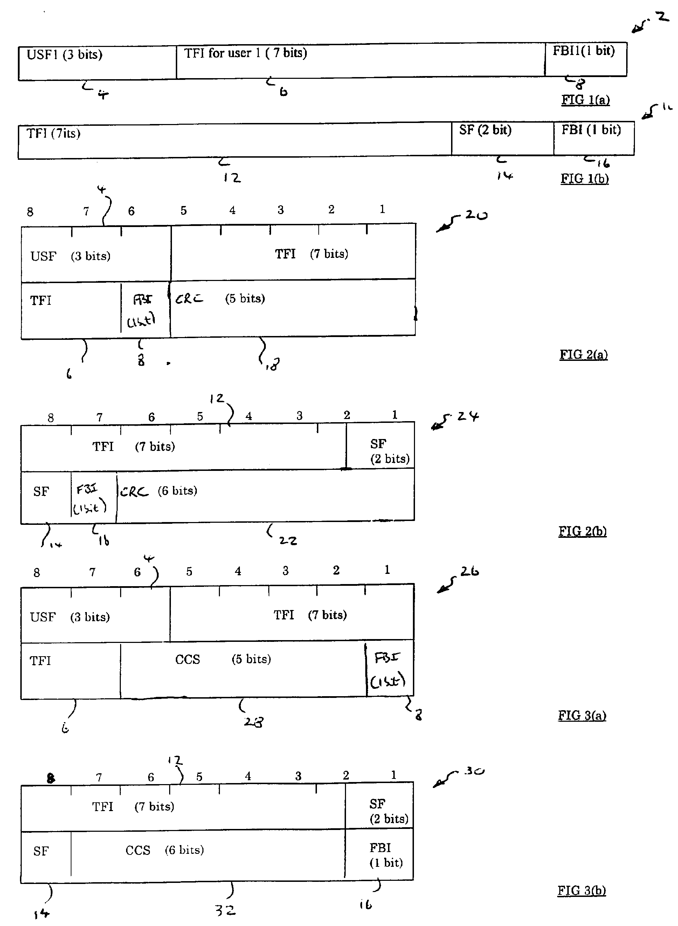

It is herein proposed to transmit voice over an EDGE packet switched network. In order to do this, a new RLC/MAC block structure is proposed in which the conventional EDGE header is modified to include those fields required to support only voice transmission. Referring to Figure 1, there is shown a first embodiment of a new RLC/MAC block header, suitable for transmission of voice over EDGE. The new RLC/MAC block structure includes a header which is reduced compared to the header of the data packets for EDGE. That is, the length of the header is shorter than that which is required for the transmission of data packets.

Thus to send voice over an EDGE network, it is proposed to change the RLC/MAC block of a standard data packet. The new block contains a header, and a payload consisting of the coded speech bits coded using a standard GSM speech encoder.

This new RLC/MAC block is coded in a different way from that of a known standard EDGE packet. This change of coding is required because for speech data different bits have different importance whereas for data every bit has equal importance.

Figure 1 (a) shows a header for transmission of voice in the down-link of an EDGE network, prior to channel encoding into an RLC/MAC block. The header 2 comprises an up-link status flag (USF) field 4, a temporary flow identity (TFI) field 6, and a final block indicator (FBI) field 8. The USF field is a 3 bit field, the TFI field is a 7 bit field, and the FBI field is a 1 bit field. All these fields, and there lengths, are defined by the GPRS standard which EDGE utilises, and the functionality of these fields in the reduced header is the same as in the normal header used in EDGE for data packet transmission.

Figure 1(b) shows a header for transmission of voice in the up-link of an EDGE network. The header 10 comprises a temporary flow identity (TFI) field 12, a speech flag (SF) field 14, and a final block indicator (FBI) field 16. The TFI field is a 7 bit field, the SF field is a 2 bit field, and the FBI field is a 1 bit field. The speech flag field is newly introduced into an EDGE header, and corresponds to the S/P bit in GPRS.

In one preferable implementation of voice over EDGE as discussed hereinbelow, each EDGE RLC/MAC block contains two speech frames, and therefore two speech flags are preferably provided in the up-link header of Figure 1 (b), in order to signal whether each of these frames corresponds to silence or voice. The speech flag field may be increased or reduced in dependence on whether more or less speech frames are included in the RLC/MAC block.

For completeness, a summary of each field of the up-link and down-link headers of Figure 1 is given hereinbelow, but one skilled in the art will be familiar with these fields and their functionality.

The USF field is used for unique addressing of the mobiles. Specifically, when a mobile receives a packet in the down-link, and reads the packets header and finds that it contains it's USF, this means that the base station has given permission to this mobile to transmit its packets on the up-link in a predefined timeslot.

The TFI field uniquely identifies a data flow. When a call is established, it is assigned a unique number. When a mobile station or a base station receives a packet and reads its header it knows which data flow (call) this packet belongs to, by reading the TFI field.

When the SF field is set to 1, the speech frame corresponds to speech. If the SF field is set to 0, the speech frame corresponds to silence.

When the FBI field is set to 1, this is an indication to the receiver that the current data flow is ended. If the FBI field is set to 0, this means that there are more packets to be transmitted in the current data flow.

Figure 2 shows a second embodiment of the new header for transmission of voice over EDGE. Figure 2(a) shows the header for transmission of voice in the up-link of an EDGE network further modified to include a set of error checking bits in a cyclic redundancy checking (CRC) field 18. The new header 20 still includes the USF field 4, the TFI field 6, and the FBI field 8.

Figure 2(b) shows the header for transmission of voice in the down-link of an EDGE network also further modified to include a set of error checking bits in a cyclic redundancy checking (CRC) field 22. The new header 24 still includes the TFI field 12, the SF field 14, and the FBI field 16. The provision of the error checking bits provides extra protection for the header. Although the headers of Figures 2(a) and 2(b) are described with reference to a CRC field for error checking, it will be appreciated that any other error checking scheme suitable for detection of errors may be utilised in accordance with the application.

The size of the CRC field in both the up-link and the down-link headers is dependent upon the error code used in the system. In a simple error checking scheme, the CRC field is generated in dependence upon the other fields in the header. At the receiver, the error field is compared to a recalculation of the CRC field based on the received header, and if an error is detected then the speech block is discarded. In data transmission this is normal, and re-transmission of the data packet may be requested after the original packet is discarded.

In voice, as mentioned hereinabove, re-transmission is impractical. If voice is sent in packet switched networks then the standard error techniques can result in a speech block being discarded on the basis of an error in the header alone, even when the speech in the payload is error free.

Therefore there is proposed herein a further new header, generally applicable to any network in which information is sent in a block comprising a header and a payload. This new header is described herein with reference to a third embodiment of the header for voice over EDGE described with reference to other embodiments in Figure 1 and Figure 2, but it will be appreciated that the technique is in fact applicable to all packet switched networks, i.e. environments in which information is conveyed in packets or blocks having a header portion and a payload, whether the packet or block conveys speech or data.

The principle of this new header is to provide an error field in the header which is generated in dependence only on bits contained in the header. This error field is then used at the receiver end to determine whether there are any errors present in the header. If one or more errors are present in the header, then the nature of the error field is such that the receiver can attempt to correct the error or errors introduced during transmission.

This means that blocks which are error free in the payload, or contain acceptable errors, are not automatically discarded. Therefore system performance is increased, particularly for the transmission of speech in packet switched networks.

Referring to Figure 3(a), the up-link header for transmitting voice over EDGE is therefore modified still further to produce a new header 26 in which the error checking field comprises a cyclic code scheme (CCS) field 28. Similarly referring to Figure 3(b), the down-link header for transmitting voice over EDGE has been modified still further to produce a new header 30 in which the error checking field comprises a cyclic code scheme (CCS) field 32.

In the header 26 for the up-link for an EDGE network, a 15,10 cyclic code is preferably used for protection of the header, having the following generator polynomial:

$$g(D) = D^5 + D^4 + D^2 + 1$$

Thus a 15 bit header is generated from the original 9 bits of the header. In accordance with the standard EDGE, the FBI bit is not included in the calculation of the CCS field. Such cyclic codes are well-known, and within the scope of one skilled in the art. This block code has double-burst-error-correcting ability and single random error correction capability. It can detect up to 3 random errors. It can detect all burst error patterns of length 5 or less. The fraction of undetected error patterns of length equal to 6 is 0.0625. The fraction of undetected error patterns of length larger than 6 is 0.03125. The code has minimum distance of 4 and is the best code known with length 15 and dimension 10.

In the header 30 for the down-link for an EDGE network a 15,9 cyclic code is preferably used for protection of the header, and has the following generator polynomial:

$$g(D) = D^6 + D^5 + D^4 + D^3 + 1$$

Thus a 15 bit header is generated from the original 10 bits of the header. In accordance with the standard EDGE, the FBI bit is again not included in the calculation of the CCS field. This block code has burst error correcting ability of three, and single random error correction ability. It can detect up to 2 random errors. It can also detect all error patterns of length up to 6. The fraction of undetected error patterns of length equal to 7 is 0.03125. The fraction of undetected error patters of length 8 or higher is 0.015625. It is clear that the TFI and SF fields are well protected and the error probability is significantly reduced with this code which has triple burst error correcting ability.

Syndrome, which is the result of a calculation done at the receiver upon reception of a code word, will be calculated for headers without error correction. If the syndrome value is zero, this is an indication that the code word contains no errors. The manner in which the syndrome is calculated depends upon the specific code used. The RLC block will thus be accepted if the syndrome is right. If the syndrome is wrong, the header will be sent for error correction. The RLC block will be discarded if the error corrector still indicates there are errors in the header because the number of errors exceeds the code error correction ability. When the error corrector indicates there are no errors in the header after error correction, the RLC block will be accepted and it assumes any errors in the header have been corrected.

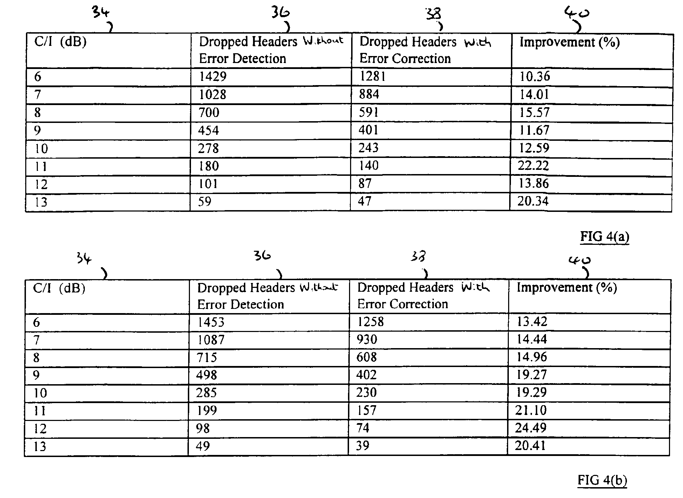

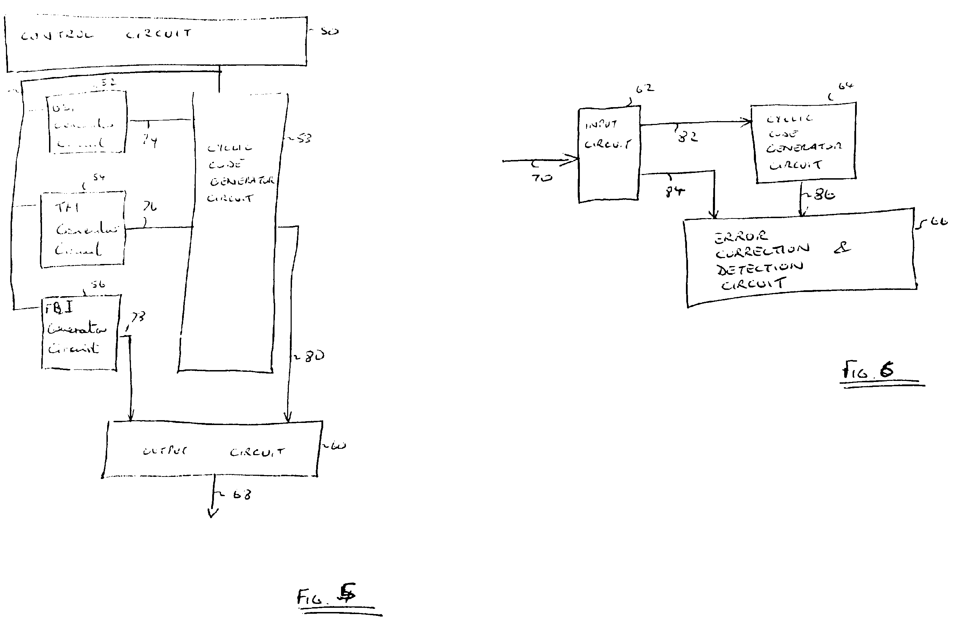

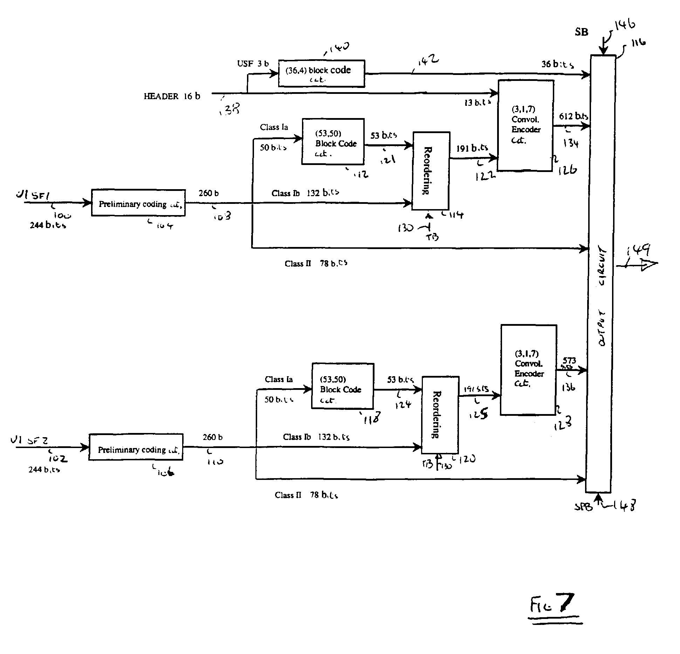

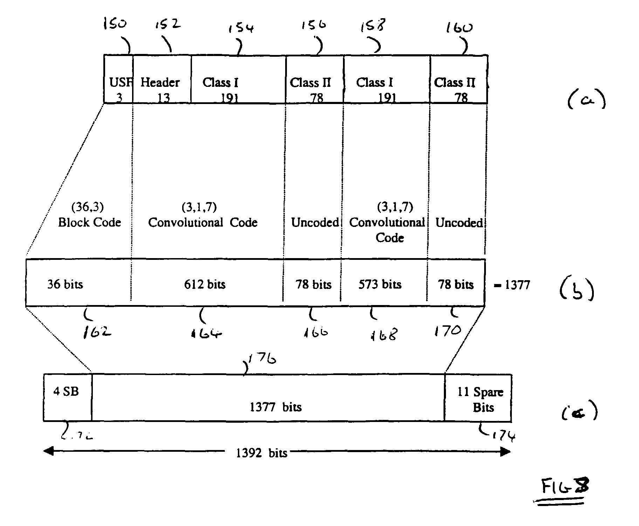

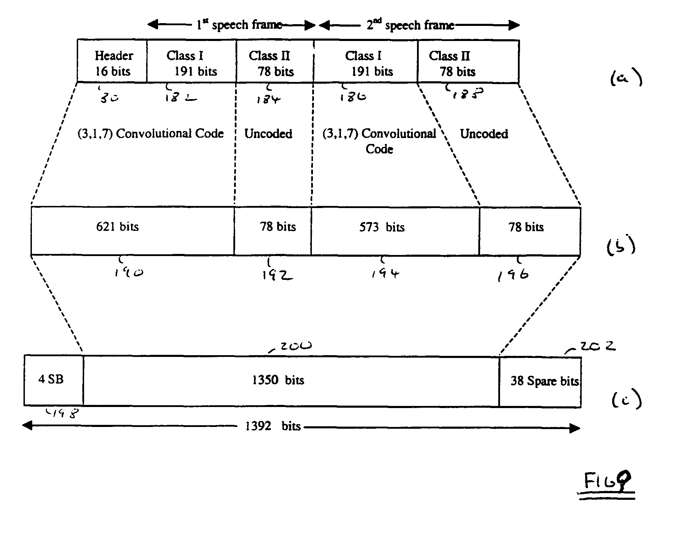

Figure 4 illustrates the simulation of performance results in the down-link and the up-link, comparing the performance with and without error correction. In the simulation the system is assumed to be interference free, and all results are presented as a function of carrier to interference ratio expressed in dB. Typical urban (TU) propagation conditions are assumed, and the mobile stations have a speed of 3km/hr. Ideal frequency hopping is utilized. During these simulations the number of dropped headers when error detection is used as well as the number of dropped headers when error correction is not used were calculated. In all cases a total number of 5000 RLC/MAC block transmissions have been simulated.

In both Figures 4(a) and 4(b) the performance table has four columns. A first column 34 shows the carrier to interference ratio as discussed above, a second column 36 shows the number of dropped headers without error correction, a third column 38 shows the number of dropped headers with error correction, and a fourth column 40 shows the percentage improvement obtained by employing the new technique.

In Figure 4(a), results for the down-link case where the 15,10 cyclic code is utilized are shown. The relative percentage improvement arising from the use of error correction is also shown. Figure 4(b) shows corresponding results for the case of up-link transmission where the 15,9 cyclic code is utilized.

The headers with errors that have been corrected are between approximately 10 to 20 percent according to the simulations. Because one corrected header will save at least one speech frame, it will improve the quality of speech significantly.

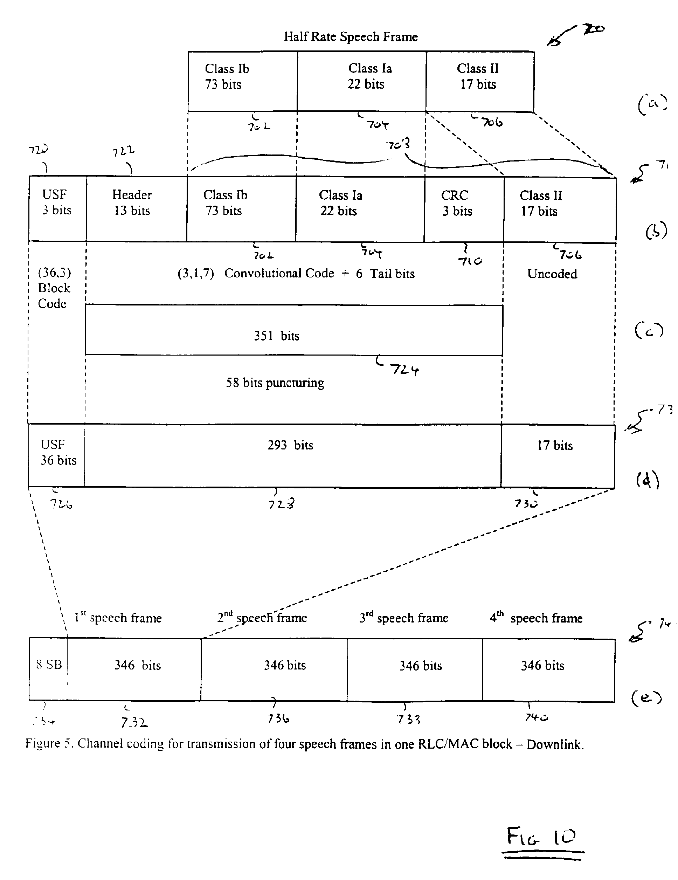

Referring to Figure 5, there is shown a block diagram of an encoder circuit for generating a header for the down-link as shown in Figure 3(a). The encoder circuit comprises a control circuit 50, a USF field generator circuit 52, a TFI field generator circuit 54, a FBI field generator circuit, a cyclic code generator circuit 58, and an output circuit 60. The control circuit 50 generates control and timing signals on lines 72 to each of the cyclic code generator circuit 58, and the header field generator circuits 52, 54 and 56. The outputs of each of the USF and TFI header field generator circuits 52 and 54 on lines 74 and 76 respectively form inputs to the cyclic code generator circuit 58. The cyclic code generator circuit generates the cyclic code from the 10 bits of the respective fields of the header as discussed hereinabove, and generates the cyclic code on line 80, and the FBI field on line 78. The output circuit receives as an input the output of the cyclic code generator circuit on line 80. The output circuit then orders the signals on lines 74, 78 and 80 appropriately and generates the header of

Figure 3(a) on line 68. Embodiments of the further encoding of the header are described further hereinbelow.

It will be appreciated, from the block diagram of Figure 5, how the encoder may be modified to provide an encoder for the up-link to generate the header structure of Figure 3(b).

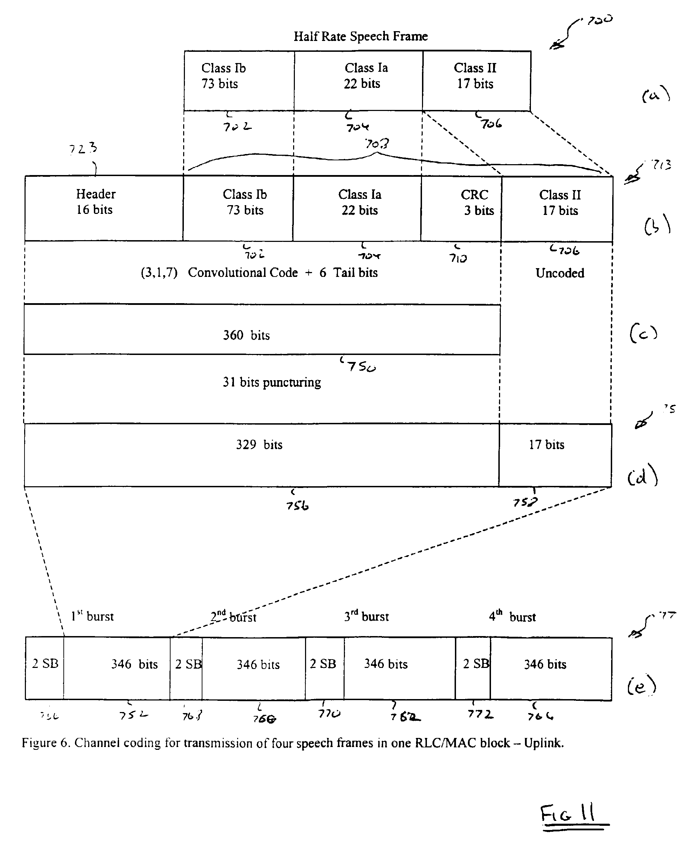

Referring to Figure 6, there is shown a block diagram of the part of the header decoding circuitry for error correction in the down-link. The part of the header decoding circuitry includes an input circuit 62, a cyclic code generator circuit 64, and an error correction and detection block 66. The input circuit receives the 16 bits of the decoded header, having the format of Figure 3(a), on line 70. The five bits of the cyclic code are provided on line 84 to the error correction and detection block. The 12 bits of the header on which the cyclic code is based are provided on line 82 to the cyclic code generator circuit, which applies the same cyclic code applied in the cyclic code generator circuit 58 of the transmitter. The thus generated additional cyclic code is presented on line 86 to the error correction and detection circuit 66. Thus the error correction and detection circuit 66 detects the presence of an error and attempts to correct it as discussed hereinabove. Again, from the description hereinabove it can be readily understood how the circuit of Figure 6 can be modified for the up-link.

In the following discussion, specific examples of encoding speech frames for transmission over EDGE are given. In these example one or another of the improved headers discussed hereinabove is utilised. It will be apparent, however, that alternative headers may be used whilst still gaining from the advantages of the described encoding techniques.

In transmitting voice over EDGE, it is advantageous wherever possible to use the components of a standard speech encoder for generating the speech frames for transmission. In the following examples, standard GSM speech encoders are utilised. However, other speech encoders may be utilised. In GSM, speech frames have Class I bits and Class II bits, and the Class I bits are further split into a Class Ia category and a Class Ib category. In general in speech different bits have different importance, and therefore in a more general case the important bits (Class I in GSM) can be considered as primary bits, and the less important bits (Class II in GSM) can be considered as secondary bits.

**Two Speech Frames from same User**

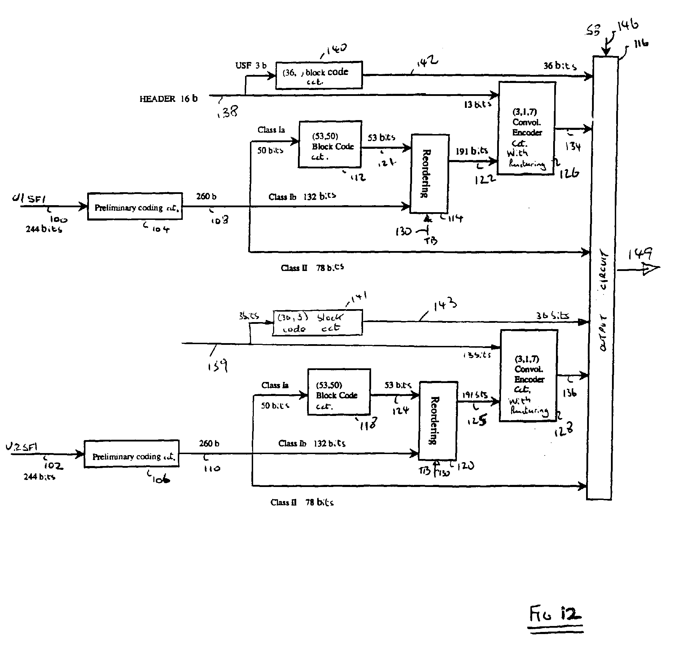

Figure 7 illustrates a block diagram of an encoder suitable for encoding two speech frames on the down-link of an EDGE system, when the two speech frames are associated with the same user. The encoder comprises a pair of preliminary coding circuits 104 and 106, a pair of block code circuits 112 and 118, a pair of reordering circuits 114 and 120, a pair of convolution encoders 126 and 128, an output circuit 116, and a further block code circuit 140.

A standard GSM enhanced full-rate speech encoder generates a speech frame having 244 bits, 174 of these bits are Class I bits, of which 50 are Class Ia and 124 are Class Ib. The remaining 70 hits are Class II bits. The 244 bits of a first speech frame U1SF1 from a first user are received on a signal line 100, and the 244 bits of a second speech frame U1SF2 from the same first user are received on a signal line 102. Each of the 244 bit speech frames U1SF1 and U1SF2 are input to one of the respective preliminary coding circuits 104 and 106.

The preliminary coding circuits 104 and 106 each generate, on a respective output signal line 108 and 110, a set of 260 bits. Each speech frame U1SF1 and U1SF2 of 244 bits are passed through one of the preliminary coding circuits to produce a respective set of 260 bits. The additional 16 bits are generated in the preliminary coding circuits by an 8-bit cycle redundancy code on the most important 65 bits of the Class I bits, and by two repetitions of the four most important Class II bits. Thus each speech frame speech frame is modified to have 50 Class Ia bits, 132 Class Ib Bits, and 78 Class II bits, giving a total of 260 bits. This preliminary coding step is in accordance with standard GSM techniques.

The 50 Class Ia bits on the signal line 108 are input to the block code circuit 112. Thereafter the 50 Class Ia bits are used to generate 3 parity bits, such that 53 bits are generated on the output line 121 of the block code circuit. Similarly the 50 Class Ia bits on the signal line 110 are input to the block code circuit 118, which generates 53 bits (including 3 parity bits) on line 124.

The 132 Class Ib bits on signal line 108 are input to the reordering circuit 114. The 132 Class Ib bits on signal line 110 are input to the reordering block circuit 120. The 53 bits on signal line 121 form a further input to the reordering circuit 114, and the 53 bits on signal line 124 form a further input to the reordering circuit 120.

Each of the respective re-ordering circuits 114 and 120 additionally receive a set of six tail bits TB on the signal line 130 and 132 respectively. A tail is then added to the end of the Class I bits, in the reordering blocks 114 and 120 respectively, which are used as trellis termination for the convolution encoder utilised for the further encoding of the Class I bits as discussed below. In EDGE six tail bits are added.

The reordering circuit 114 reorders the 53 Class I bits on lines 121, the 132 Class I bits on line 108, and the 6 tail bits on line 130 to generate 191 Class I bits on signal line 122. The reordering circuit 120 reorders the 53 Class I bits on lines 124, the 132 Class I bits on line 110, and the 6 tail bits on line 132 to generate 191 Class I bits on signal line 125. The 191 bit outputs on lines 122 and 124 respectively form inputs to the respective convolution encoder circuits 126 and 128.

The 78 Class II bits on line 108 are input directly to the output block 116. The 78 Class II bits on line 110 are input directly to the output block 116.

Thus the 244 bit speech frames U1SF1 and U1SF2 are encoded, at this stage, into respective 269 bit speech frames having 191 Class I bits and 78 Class II bits.

The encoding of the speech frame up to now is in conformance with speech encoding techniques used in GSM, and may be implemented in a standard GSM speech encoder. The one difference is that in standard GSM only four tail bits are required. Therefore in standard GSM there are usually only 189 Class I bits at this stage.

In this advantageous embodiment of encoding two speech frames, an efficient coding technique is able to be utilised by encoding only one header, as opposed to two. That is, it is recognised that the headers associated with the two speech frames are identical as they are associated with the same user. Therefore, one header is discarded, resulting in a fewer number of bits needing to b encoded, as described below. As will also become apparent from the following description, the requirement for the encoding of only one header when the speech frames are generated using an enhanced full-rate encoder enables two speech frames to be encoded into a single RLC/MAC block without the need for any puncturing in the encoding, resulting in a very efficient coding scheme.

The 16 bits of the down-link header are presented on signal line 138. In this example the advantageous header structure for the down-link of Figure 3(a) is utilised. The three USF bits form an input to the block code circuit 140, which generates 36 bits on its output signal line 142 to the output circuit 116, utilising a standard block code from EDGE. The other 13 bits of the header on line 138 form a further input to the convolution encoder circuit 126.

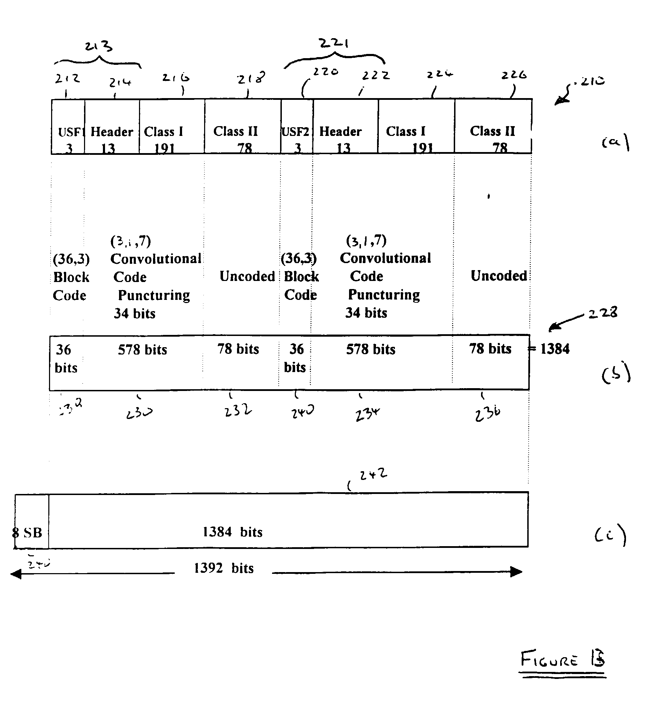

Referring to Figure 8(a), there is shown the unencoded down-link speech block or packet described up to now. The 3 bits of the USF field of the header on line 138 are designated by numeral 150, the remaining 13 bits of the header on line 138 are designated by reference numeral 152. The 191 Class I bits of the first speech frame from the first user on line 122 are designated by reference numeral 154, and the 78 Class II bits of the first speech frame from the first user on line 108 are designated by reference numeral 156. The 191 Class I bits of the second speech frame from the first user on line 124 are designated by reference numeral 158, and the 78 Class II bits of the second speech frame from the first user on line 110 are designated by reference numeral 160.

As discussed hereinabove, the three USF bits of the down-link header are block coded into 36 bits and passed to the output circuit 116, as designated by reference numeral 162 in Figure 8(b). For the encoding of the USF field in the header the 36,3 linear block code as suggested for EDGE data transmission is used. The code is given below in Table I.

Table I

| USF | Encoded USF |
|-----|-------------|
| 000 | 0000000000000000000000000000 00000000 |
| 001 | 00000011100101111001001111011 10101111 |
| 010 | 00011100101111001001110111101 01111000 |
| 011 | 00011111001010110000111001100 11010111 |
| 100 | 11100101111001001110111010111 11000000 |
| 101 | 11100110011100110111110100000 01101111 |
| 110 | 11111001010110000111001101100 10111000 |
| 111 | 11111010110011111110000011010 00010111 |

The 191 Class I bits of the first speech frame on line 122 are combined with the remaining 13 hits of the header (i.e. all fields except the 3 USF bits) on line 138 in the convolutional encoder circuit 126. A 3,1,7 convolution code is utilised in the convolution encoder circuit 126 to generate 612 bits on the output signal line 134, which are passed to the output circuit 116. These 612 bits are designated by reference numeral 164 in Figure 8(b).

The 3,1,7 convolutional code utilised in this preferred embodiment is more powerful than the one proposed for data transmission in EDGE. The code has a rate of 1/3 and a constraint length of 7 and therefore it is of the same complexity with the code proposed for EDGE.

The generator polynomials of the rate 3,1,7 convolutional code are as follows:

$$G_0(D) = 1 + D^2 + D^3 + D^5 + D^6$$

$$G_1(D) = 1 + D + D^2 + D^3 + D^4 + D^6$$

$$G_2(D) = 1 + D + D^4 + D^6$$

This code is the best known code in its class. The free distance of the code is $d_{free}$ = 15. The code proposed in EDGE has a free distance of 14 (when puncturing is not applied).

The 78 Class II bits are passed to the output circuit 116 unencoded from line 108, and are designated by reference numeral 166 in Figure 8(b). It is standard in GSM for the Class II bits to be unencoded.

The 191 Class I bits of the second speech frame on line 125 are input to the convolutional encoder circuit 128. The 3,1,7 convolution code is again utilised in the convolution encoder circuit 126 to generate 573 bits on the output signal line 136, which are passed to the output circuit 116. These 573 bits are designated by reference numeral 168 in Figure 8(b).

The 78 Class II bits are passed to the output circuit 116 in unencoded form on line 110, and are designated by reference numeral 170 in Figure 8(b).

The output circuit 116 additionally receives 4 stealing bits SB on line 146. The four stealing bits are used to signal the type of the header (as in data transmission over EDGE). Each TDMA burst contains one stealing bit. Four stealing bits are therefore provided, as it is proposed herein that the RLC/MAC block is spread over four bursts as for data over EDGE. In addition to the 1377 bits generated and as shown in Figure 8(b), this leaves the total number of bits as 11 short of the number of bits available in an EDGE RLC/MAC block. Thus the output circuit 116 additionally receives 11 spare bits SPB on line 148. The output circuit then generates the completed EDGE RLC/MAC block on line 149, comprising 1392 bits, for transmission.

Referring to Figure 8(c), the completed RLC/MAC block for the down-link is illustrated, and corresponds to the format shown in Figure 8(b) with the addition of the 4 stealing bits designated by reference numeral 172, and the 11 spare bits designated by reference numeral 174. Reference numeral 176 represents the 1377 bits of Figure 8(b).

In practice only one of the convolution encoders 126 or 128 may be provided. Such a single convolution encoder may be utilised for encoding both speech frames in sequence.

Whilst the above description has been in relation to the transmission of two speech frames in the same RLC/MAC block in the down-link, and Figure 8 represents a summary of the channel coding for transmission of two speech frames in one RLC/MAC block for down-link transmission, similar techniques apply in the up-link. Figure 9 illustrates the channel coding principle applied for transmission of two speech frames in one RLC/MAC block for up-link transmission.

The encoder for generating the RLC/MAC block in the up-link will be very similar to that in the down-link shown in Figure 7, and is therefore not shown herein. The encoder in the up-link differs in that the block code circuit 140 for the header is not provided, and all 16 bits of the up-link header of Figure 3(b) are combined with the 191 bits on line 122 in the convolution encoder. In addition, the number of spare bits in the RLC/MAC block following convolution encoding is 38, and hence the number of spare bits SPB on line 148 is increased to 38.

Referring to Figure 9(a), there is shown the unencoded up-link speech block or packet. The 16 bits of the header on line 138 are designated by reference numeral 180. The Class I bits of the first speech frame from the first user on line 122 are designated by reference numeral 182, and the Class II bits of the first speech frame from the first user on line 108 are designated by reference numeral 184. The Class I bits of the second speech frame from the first user on line 124 are designated by reference numeral 186, and the Class II bits of the second speech frame from the first user on line 110 are designated by reference numeral 188.

The 191 Class I bits of the first speech frame on line 122 are combined with 16 bits of the header on line 138 in the convolutional encoder circuit 126. A 3,1,7 convolution code is again utilised in the convolution encoder circuit 126 to generate 621 bits on the output signal line 134, which are passed to the output circuit 116. These 621 bits are designated by reference numeral 190 in Figure 9(b).

The 78 Class II bits are passed to the output circuit 116 unencoded from line 108, and are designated by reference numeral 192 in Figure 9(b).

The 191 Class I bits of the second speech frame on line 125 are input to the convolutional encoder circuit 128. A 3,1,7 convolution code is again utilised in the convolution encoder circuit 126 to generate 573 bits on the output signal line 136, which are passed to the output circuit 116. These 573 bits are designated by reference numeral 194 in Figure 9(b).

The 78 Class II bits are passed to the output circuit 116 unencoded from line 110, and are designated by reference numeral 196 in Figure 9(b).

Referring to Figure 9(c), the completed RLC/MAC block for the up-link is illustrated, and corresponds to the format shown in Figure 9(b) with the addition of the 4 stealing bits designated by reference numeral 198, and the 38 spare bits designated by reference numeral 202. Reference numeral 200 represents the bits of Figure 8(b).

On the up-link or the down-link the 1392 bits of the RLC/MAC block are passed to an 8-PSK modulator of the EDGE encoder. The RLC/MAC speech blocks are preferably interleaved over four bursts, as in the transmission of data packets in EDGE.

At the receiver, the reverse decoding stages are utilised. If the header of a received speech frame is in error, then an error correction is attempted. If the error correction is successful, the received speech frame may still then be discarded if either of the two CRC checks is not successful (the 3 bits protecting the 50 Class Ia bits or the 8 bits CRC protecting the 65 most important Class I bits).

Thus in the above there has been described a technique for encoding two speech frames from the same user in a single RLC/MAC block for transmission over EDGE. Although this technique has been specifically described in relation to a technique for transmitting voice over EDGE, it applies more broadly to the transmission of voice over packet switched networks. The technique allows two speech frames from one user to be encoded into a single RLC/MAC block using an encoding scheme which is proven to be advantageous. More importantly, there is no requirement for any puncturing of bits in implementing the encoding scheme. That is, there is no need to remove bits of the encoded speech frames to ensure that the number of bits fits into the RLC/MAC block, as may normally be expected to be required with the encoding of speech data. This particular advantage is achieved by utilising the characteristic that if two speech frames are from the same user, then the headers associated with those speech frames are identical. Therefore one of the headers is redundant and can be removed from the packet to be encoded. This reduces the number of bits to be encoded and allows a particularly advantageous coding scheme to be utilised.

In addition, it should be appreciated that this technique may be advantageously utilised in encoding of more than two speech frames from the same user in a single RLC/MAC block. Regardless of the number of speech frames, if they are from the same user only one header is required.

In the following description, two examples are given of the encoding of two speech frames which are associated with different users. One characteristic of speech frames from different users is that in the down-link one user does not have any information about the other user.

The principle described hereinabove for encoding four speech frames from the same user in a single RLC/MAC block may be further extended to the encoding of larger numbers of speech frames from the same user in a single RLC/MAC block.

**Two Speech frames from Different User - Case 1**

Referring to Figure 12, there is shown a block diagram illustrating one embodiment for encoding two speech frames from two different users in the down-link of a packet switched network. The down-link encoder of Figure 12 corresponds substantially to the down-link encoder of Figure 7, and like reference numerals have been used to denote like elements. The main difference lies in the addition of a further block code circuit 141. In addition the convolution encoder circuits 126 and 128 are modified to additionally include puncturing, as will be described further hereinbelow.

This embodiment utilises the 244 bit speech frames generated by an enhanced full-rate GSM speech encoder, as described hereinabove with reference to Figure 7. The 244 bits of a first speech frame U1SF1 from a first user are received on the signal line 100, and the 244 bits of a first speech frame U2SF1 from a second user are received on the signal line 102. Each of the 244 bit speech frames U1SF1 and U2SF1 are processed by the preliminary coding circuits 104 and 106, the block code circuits 112 and 118, and the reordering circuits 120 exactly as described hereinabove with reference to Figure 7.

As the two speech frames are from different users, then there are two respective different headers associated with each speech frame. Hence the block code circuit 141 is introduced to handle the header associated with the second user speech frame on line 102. The header associated with the first user speech frame on line 100 is processed in the same manner as the common header is processed in the circuit of Figure 7, by the block code circuit 140.

The 16 bits of the down-link header for the second user associated with the speech frame U2SF1 are presented on signal line 139. The three USF bits form an input to the block code circuit 141, which generates 36 bits on its output signal line 143 to the output circuit 116, utilising the standard block code from EDGE discussed hereinabove with reference to Figure 7. The other 13 bits of the header on line 139 form a further input to the convolution encoder circuit 128.

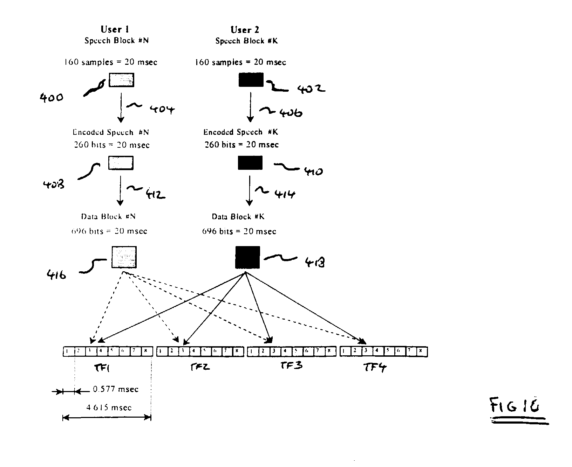

Referring to Figure 13(a), there is shown the unencoded down-link speech block or packet, including two speech frames from two different users, prior to the operation of the convolutional encoder circuits with puncturing 126 and 128. In this example, each speech frame advantageously utilises the header format of Figure 3(a). A first speech frame from a first user thus includes a USF field 212 of the header 213, and the remainder of the header is designated by reference numeral 214. The Class I bits of the first speech frame from the first user are designated by reference numeral 216, and the Class II bits from the first speech frame from the first user are designated by reference numeral 218. A first speech frame from a second user includes a USF field 220 of the header 221, and the remainder of the header is designated by reference numeral 222. The Class I bits of the first speech frame from the second user are designated by reference numeral 224, and the Class II bits from the first speech frame from the second user are designated by reference numeral 226.

As discussed above, the 3 bits of the USF field 212 of the header associated with the first user are block encoded in the block code circuit 140 to give 3 bits on line 142, designated by reference numeral 238 in Figure 13(b).

The 191 Class I bits of the first speech frame from the first user on line 122 are combined with 16 bits of the header on line 138 in the convolutional encoder circuit with puncturing 126. A 3,1,7 convolution code is again utilised in the convolution encoder circuit 126, and the encoder circuit punctures 34 bits such that 578 bits are generated on the output 134 of the encoder circuit. These 578 bits are designated by reference numeral 230 in Figure 13(b).

In a preferable implementation. the puncturing scheme used is as follows:
   b(9+ j*17) j=0,1... 33,
where b(i) is the output of the 3,1,7 encoder. This scheme will not puncture any CRC bits. For Class I bits, the total output is 573 bits, with the CRC bits located in positions 151 to 159. The closest bits to the CRC which are punctured are bits 145 and 162. The last bit punctured is 570.

The 78 Class II bits 218 are passed to the output circuit 116 unencoded from line 108, and are designated by reference numeral 232 in Figure 13(b).

As discussed above, the 3 bits of the USF field 220 of the header associated with the second user are block encoded in the block code circuit 141 to give 3 bits on line 143, designated by reference numeral 240 in Figure 13(b).

The 191 Class I bits of the first speech frame from the second user on line 125 are input to the convolutional encoder circuit 128. A 3,1,7 convolution code is again utilised in the convolution encoder circuit 128, and the encoder circuit punctures 34 bits such that 578 bits are generated on the output 136 of the encoder circuit 128. These 578 bits are designated by reference numeral 234 in Figure 13(b).

The 78 Class II bits 224 are passed to the output circuit 116 in unencoded form on line 110, and are designated by reference numeral 236 in Figure 13(b).

The encoder of Figure 12 also differs from that of Figure 7 in that there are 8 stealing bits SB provided on line 146, and there is no requirement for spare bits to be provided.

Referring to Figure 13(c), the completed RLC/MAC block for the down-link is illustrated, and corresponds to the format shown in Figure 13(b) with the addition of the 8 stealing bits designated by reference numeral 240. Reference numeral 242 represents the bits of Figure 13(b).

Four more stealing bits are added to guarantee a complete in-band signal when the second user is absent.

On the up-link or the down-link the 1392 bits of the RLC/MAC block are passed to an 8-PSK modulator of the EDGE encoder. The RLC/MAC speech blocks are preferably interleaved over four bursts, as in the transmission of data packets in EDGE.

At the receiver, the reverse decoding stages are utilised. If the header of a received speech frame is in error, then an error correction is attempted. If the error correction is successful, the received speech frame may still then be discarded if either of the two CRC checks is not successful (the 3 bits protecting the 50 Class Ia bits or the 8 bits CRC protecting the 65 most important Class I bits).

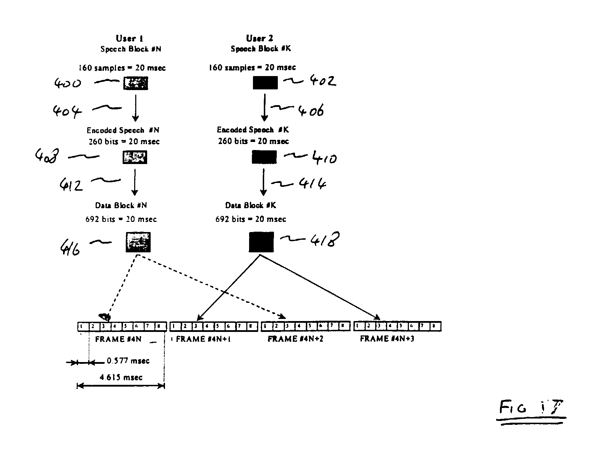

The encoder for generating the RLC/MAC block in the up-link will be very similar to that in the down-link shown in Figure 12, and is therefore not shown herein. The encoder in the up-link differs in that it is effectively simply half of the encoder shown in Figure 12. The operation of the encoder in the up-link is best illustrated with reference to Figure 14

In the up-link, each user encodes its associated speech frame. Thus Figure 14(a) illustrates the unencoded speech frame for one of the users, for example the first user. Again, the preferable header format of Figure 3(b) is used in the up-link. The unencoded speech frame, as shown in Figure 14(a), comprises a header field 256 comprising the 16 bits of Figure 12, the 191 Class I bits designated by reference numeral 258, and the 78 Class II bits designated by reference numeral 260.

In the up-link, the full 16 bits of the header are convolution encoded with the Class I bits, as discussed hereinabove in the embodiment of two speech frames from the same user. Again, the 3,1,7 convolution code is used, and in the case of the up-link it is necessary to puncture 7 bits. Thus in the up-link the convolution encoder generates 614 bits 262 as shown in Figure 14(b). In the up-link only 7 bits are punctured.

The puncturing scheme used in a preferable implementation is for Class Ib bits only, and may be expressed as:

$b(200+ j*49)$ j=0,1... 6,

where b(i) is the output of the 3,1 encoder. This scheme will not puncture any CRC bits. The CRC bits are located at 151 to 159. Puncturing starts at 200 and finishes at 494.

The 78 Class II bits are included in the encoded speech frame 252 unencoded as before, and are designated by reference numeral 264.

The thus encoded speech frame 252 has four stealing bits 266 added thereto, and this represents half of an RLC/MAC block as shown in Figure 14(c), where the bits of Figure 14(b) are represented by reference numeral 268.

**Interleaving Scheme**

The present description has a particular emphasis on the application of techniques to an EDGE system. In EDGE, it is proposed that data packet encoded into an RLC/MAC block should be transmitted on the down-link or the up-link in four bursts. That is the 1392 bits of an RLC/MAC block should be split into four sections, with each section being sent in a separate burst.

As will be familiar to one skilled in the art, each burst occupies a time slot of a TDMA frame. That is, transmission in a TDMA system takes place in a series of TDMA frames, each of which is split into a number of time slots. Each time slot, in a circuit switched network having dedicated physical channels, is allocated to, and reserved for sole use by, one particular user. Each user then transmits in their time-slot of each TDMA frame, both in the down-link and the up-link.

Referring to Figure 15(b), there is shown the standard format of a GSM/GPRS burst. The burst 600 comprises a set of 3 tail bits 606 at the front, followed by a set of 58 data bits 608, followed by a set of 26 bits 610 comprising a training sequence, followed by a set of 58 data bits 612, followed by a further 3 tail bits 614 and finally a set of 8.25 bits comprising a guard 616.

Information is transmitted on the physical channel in TDMA time slots, as illustrated in Figure 15(a). In a TDMA system each TDMA time frame 611 comprises a set of time slots, and in the example of Figure 15(a) each time frame comprises a set of eight time slots TN1 to TN8. Each time slot TN1 to TN8 of a TDMA frame carries a burst having the format shown in Figure 15(b). Ordinarily, each time slot within a frame is reserved for use by a particular user.

Referring to Figure 15(c), the interleaving of a data RLC/MAC block into TDMA frames in a conventional GSM/GPRS system is shown. Block 800 represents the 464 bits of a first RLC/MAC speech block associated with a first user, block 802 represents the 464 bits of a second RLC/MAC block associated with the same first user, and block 804 represents the 464 bits of a third RLC/MAC speech block associated with the same user.

In conventional GSM/GPRS, the 464 bits of a particular block, e.g. the second block 802, are interleaved over eight bursts (in eight TDMA frames) with the least half of the bits from the previous block 800 (designated by reference numeral 801) and the first half of the bits from the next block 804 (designated by reference numeral 805).

Thus, as indicated by the arrows in Figure 15(c) and as is well understood by one skilled in the art, the first set of 58 bits (including the stealing bits) of the block 802 are interleaved in the third time slot of a first time frame TF1 with the fifth set of 58 bits of the block 800. The second set of 58 bits of the block 802 are interleaved in the third time slot of a second time frame TF2 with the sixth set of 58 bits of the block 800. The third set of 58 bits of the block 802 are interleaved in the third time slot of a third time frame TF3 with the seventh set of 58 bits of the block 800. The fourth set of is bits of the block 802 are interleaved in the third time slot of a fourth time frame TF4 with the eighth set of 58 bits of the block 800. The fifth set of 58 bits of the block 802 are interleaved in the third time slot of a fifth time frame TF5 with the first set of 58 bits of the block 804. The sixth set of 58 bits of the block 802 are interleaved in the third time slot of a sixth time frame TF6 with the second set of 58 bits of the block 804. The seventh set of 58 bits of the block 802 are interleaved in the third time slot of a seventh time frame TF7 with the third set of 58 bits of the block 804. The eighth set of 58 bits of the block 802 are interleaved in the third time slot of an eighth time frame TF8 with the fourth set of 58 bits of the block 804. The sets of bits are selected to minimise correlation.

Conversely in the EDGE proposal, each RLC/MAC block is transmitted over four time frames, and hence over four time slots in four successive time frames as illustrated in Figure 15(d).

Figure 15(d) represents the arrangement of EDGE when an 8 PSK modulator is used. This allows each conventional burst to accommodate three times the conventional number of bits, i.e. 464 (456 bits plus eight stealing bits). Thus the 1392 bits of an EDGE RLC/MAC block, represented by block 810 in Figure 15(d), are interleaved over four successive TDMA time frames TF1 to TF4 in the third time slot. Each time slot carries a single burst carrying 348 bits of data.

As can be seen from Figure 15(d), each burst can carry 348 bits of data, and therefore the 1392 bits of data of the encoded RLC/MAC block can be transmitted over four bursts. However, in the embodiments described herein for the transmission of voice over EDGE the 1392 bits of data may be from two different users, and ordinarily each user would need to be allocated a separate time slot in each time frame.

In order to facilitate a particularly advantageous transmission scheme, there is proposed herein a scheme in which two users share a time slot within a TDMA frame on both the down-link and the up-link. This scheme may be applied advantageously to the transmission of speech frames from two different users over EDGE encoded according to the technique described hereinabove.

According to the new technique proposed herein, the data from each of the two users is transmitted in a common time frame. Referring to Figure 13(c) it can be seen that the encoded RLC/MAC block comprises 696 bits associated with the first user (including four stealing bits), and 696 bits associated with the second user (including four stealing bits). In accordance with the new technique, in the down-link a quarter of the encoded bits associated with the first user are transmitted in an allocated time slot of each frame on four successive frames, and a quarter of the encoded bits associated with the second user are transmitted in the same allocated time slot of each time frame on the same four successive frames.

Thus, suppose that time slot TN3 is allocated to the two users. In time slot TN3 of time frame TF1 174 bits (including one stealing bit) of the encoded RLC/MAC associated with the first user are transmitted in the data portion 608 of the burst, and 174 bits (including one stealing bit) of the encoded RLC/MAC associated with the second user are transmitted in the data portion 612 of the burst. In time slot TN3 of time frame TF2 a further 174 bits (including one stealing bit) of the encoded RLC/MAC associated with the first user are transmitted in the data portion 608 of the burst, and a further 174 bits (including one stealing bit) of the encoded RLC/MAC associated with the second user are transmitted in the data portion 612 of the burst. This is then repeated for a further two bursts such that all 1392 bits of the burst are transmitted in four successive bursts.

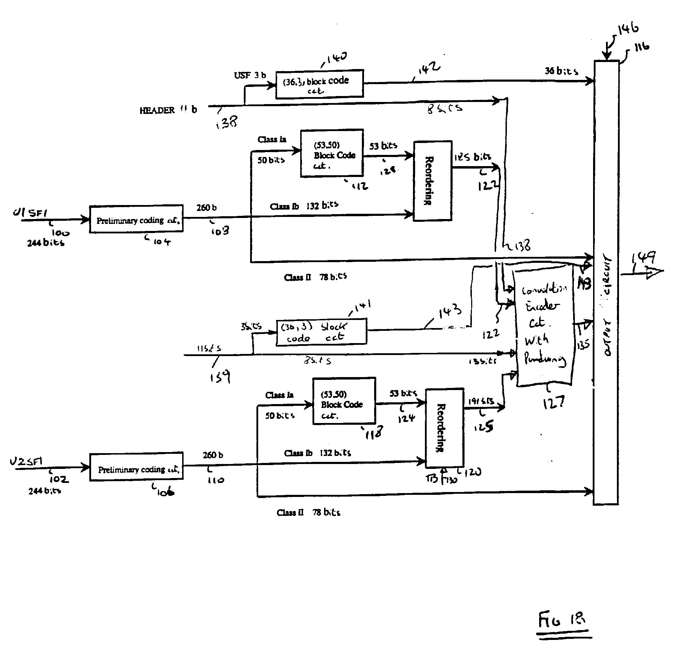

Referring to Figure 16, there is further illustrated the principle of such a scheme applied to the down-link, for transmitting the RLC/MAC blocks of Figure 13(c).

A block designated by reference numeral 400 represents 160 samples of speech associated with a first user in a 20ms time frame, prior to initial channel encoding. As represented by the arrow 404, these 160 samples are encoded into a 260 bit speech frame for the first user as designated by reference numeral 408, which are the set of bits on the output 108 of the preliminary coding circuit 104. These 260 bits still occupy a 20ms time period. The 260 bits of the speech frame are then encoded into the 696 bits constituting half of the RLC/MAC block on the output 149 of the output circuit 116, which step is represented by arrow 412. The 696 bits of the RLC/MAC block are designated by reference numeral 416.

Similarly, for the second user, the arrows 406, 410 and 414 correspond directly to the functions illustrated by the arrows 400, 408 and 416 respectively. The blocks designated 402, 410, and 414 for the second user correspond directly to the blocks 404, 412 and 416 for the first user.

Thus the block 418 corresponds to the set of 696 bits of the RLC/MAC block of Figure 13(c) associated with the second user.

The third time slot of the TDMA frames is allocated to both users. In a first frame TF1 a first quarter of the encoded data for each user plus two respective steering bits is transmitted. In a second frame TF2 a second quarter of the encoded data for each user plus two respective stealing bits is transmitted. In a third frame TF3 a third quarter of the encoded data for each user plus two respective stealing bits is transmitted. In a fourth frame TF4 a fourth quarter of the encoded data for each user plus two respective steering bits is transmitted. Thus the whole RLC/MAC block is transmitted over four bursts or time slots.

In a preferred implementation, the coded bits are reordered and interleaved according to the following rule:

i(B,j) = c(n,k)

for:

    k= 0,1,...,691
    n = 0,1....,N,N+1,...where n is the frame number.

The result of the interleaving is a distribution of the reordered 692 bits of a given user one speech block, n = N, over 4 blocks using the even numbered bits of the first 2 blocks (B = B0+2N+0,1) and the odd numbered bits of the last 2 blocks (B = B0+2N+2,3). The reordered bits of the second user speech block, n = K, use the odd numbered bits of the first 2 blocks (B = B0+2N+0,1) and the even numbered bits of the last 2 blocks (B = B0+2N+2,3).

The mapping is given by the rule:

e(B,j) = i(B,j) and e(B,176+j) = i(B,174+j) for j = 0,1,...,173

and

e(B,174) = SB(2B) and e(B,175)= SB(2B+1)

The two bits, labeled SB(2B) and SB(2B+1) on burst number B are flags used for indication of control channel signaling.

In the up-link, the technique proposed with reference to Figure 16 is not feasible, since neither user is synchronised with the other. However an adaptation of the technique is still possible, which still employs the concept of the two users sharing the same time slot to transmit the 1392 bits of the RLC/MAC block over four successive bursts.

Again, suppose that time slot TN3 is allocated to the two users. In time slot TN3 of time frame TF1 174 bits (including one stealing bit) of the encoded RLC/MAC associated with the first user are transmitted in the data portion 608 of the burst, and a further 174 bits (including one stealing bit) of the encoded RLC/MAC associated with the first user are transmitted in the data portion 612 of the burst. In time slot T3 of time frame TF2 174 bits (including one stealing bits) of the encoded RLC/MAC associated with the second user are transmitted in the data portion 608 of the burst, and a further 174 bits (including one stealing bit) of the encoded RLC/MAC associated with the second user are transmitted in the data portion 612 of the burst. The remaining bits associated with the first user are then transmitted in the third time frame TF3, and the remaining bits associated with the second user are then transmitted in the fourth time frame.

Referring to Figure 17, there is further illustrated the principle of such a scheme applied to the up-link, for transmitting the RLC/MAC blocks of Figure 13(c).

The blocks 400, 408, and 416 in Figure 17 correspond to the same blocks as like reference numerals in Figure 16, and are associated with the first user. The blocks 402, 410, and 418 in Figure 17 similarly refer to the same blocks as like reference numerals in Figure 16, and are associated with the second user.

The 696 bits of the RLC/MAC block for the first user are designated by reference numeral 416, and the 696 bits of the RLC/MAC block for the second user are designated by reference numeral 418.

Similarly, for the second user, the arrows 406, 410 and 414 correspond directly to the functions illustrated by the arrows 400, 408 and 416 respectively. The blocks designated 402, 410, and 414 for the second user correspond directly to the blocks 404, 412 and 416 for the first user.

The 696 bits of the encoded RLC/MAC block are interleaved over two even/odd bursts and passed to the 8-PSK modulator.

In the up-link, the coded bits are preferably reordered and interleaved according to the following rule:

i(B,j) = c(n,k) for k = 0,1,...,691

n = 0,1....,N,N+1,...

The result of the interleaving is a distribution of the reordered 692 bits of the user one speech block, n = N, over 2 even blocks (B = B0+2N+0,2) and the reordered bits of the user two speech block, n = K, use odd blocks (B = B0+2N+1,3).

The mapping is given by the rule:

e(B,j) = i(B,j) and e(B,176+j) = i(B,174+j) for j = 0,1,...,173

and

e(B,174) = SB(2B) and e(B,175) = SB(2B+1)

The two bits, labeled SB(2B) and SB(2B+1) on burst number B are flags used for indication of control channel signaling.

**Two Speech frames from Different User - Case II**

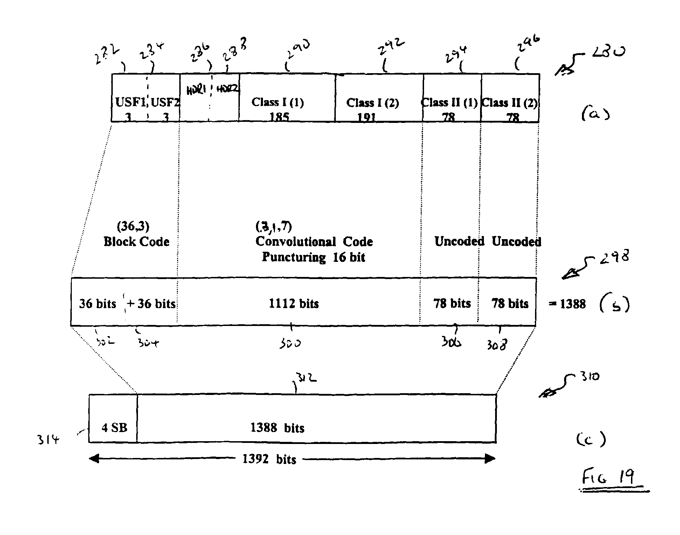

Referring to Figure 18, there is shown a block diagram illustrating a second embodiment for encoding two speech frames from two different users in the down-link of a packet switched network. The down-link encoder of Figure 18 corresponds substantially to the down-link encoder of Figure 12, and like reference numerals have been used to denote like elements. The main difference lies in the combining of the convolution encoder circuits with puncturing 126 and 128 into a single convolution encoder circuit with puncturing 127.

In this embodiment, the header for the down-link shown in Figure 1(a) is used.

The 244 bits of the first speech frame U1SF1 from the first user are received on the signal line 100, and the 244 bits of the first speech frame U2SF1 from the second user are received on the signal line 102. Each of the 244 bit speech frames U1SF1 and U2SF1 are processed by the preliminary coding circuits 104 and 106, and the block code circuits 112 and 118 exactly as described hereinabove with reference to Figures 7 and 12.

The reordering circuit 120 processes the 53 Class Ia bits on line 124 and the 132 Class II bits on line 110 in exactly the same manner as described hereinabove with reference to Figures 7 and 12. Thus the reordering circuit 120 generates the reordered 191 bits, including the 6 tail bits supplied on the tail bit input TB on line 130.

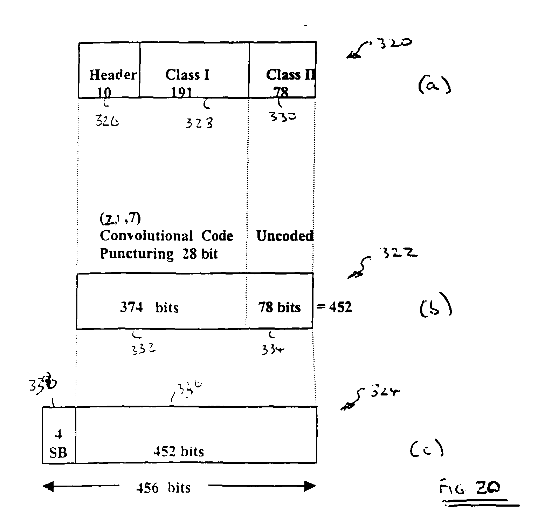

The reordering circuit 114, however, is modified relative to the re-ordering circuit 114 of Figures 7 and 12. The reordering circuit 114 of Figure 18 does not receive any tail bits, and thus the 185 bits at its input are presented on its output line 122. The reason why the tail bits are not provided to the reordering block 114 are most easily understood with reference to Figure 19.

Figure 19(a) illustrates the format of the two speech frames, and their associated headers, prior to encoding into the format for the RLC/MAC block.

The 3 bits of the USF field from the first user's header on line 138 are designated by reference numeral 282. The 3 bits of the USF field from the second user's header on line 139 are designated by reference numeral 284. The remaining 8 bits of the first user's header on line 138 are designated by reference numeral 286, and the remaining 8 bits of the second user's header on line 138 are designated by reference numeral 288. The 185 Class I bits from the first user on line 122 are designated by reference numeral 290, and the 191 Class I bits from the second user on line 125 are designated by reference numeral 292. The 78 Class II bits from the first user on line 108 are designated by reference numeral 294, and the 78 Class II bits from the second user on line 110 are designated by reference numeral 296.

It can be seen from studying Figure 19(a), and comparing it to Figure 13(a), that the fields in the unencoded block of Figure 19(a) have been rearranged such that equivalent fields from each user are adjacent. This introduces an advantage by the location of the two Class I fields of each block adjacent each other. As discussed hereinabove, the six tail bits are introduced into the Class I bits as a tail to terminate the convolution encoder. By placing the two sets of Class I bits together, and encoding them together, the set of tail bits for one set of Class I bits can be removed. Thus the set of tail bits associated with the first user is eliminated, and hence the reordering circuit 114 only needs to generate 185 bits, and does not need to include any tail bits.

This saving of bits results in the more efficient implementation of the convolution code. The combined convolution encoder circuit with puncturing encodes the two remaining sets of 8 bits of each header and the two sets of Class I bits into a set of 1112 bits by utilising the 3,1,7 convolution code as discussed above. The convolution encoder with puncturing punctures 16 bits. The encoded speech frames are illustrated in Figure 19(b). The 1112 convolution encoded bits are designated by reference numeral 300.

The puncturing scheme is applied for Class Ib bits only and the preferable scheme is represented by:
b(200+ j*49) j=0,1... 7, where b(i) is the output of the 3,1,7 encoder.
b(755+ j*49) j=8,... 15, where b(i) is the output of the 3,1,7 encoder.

The total number of bits reduces from 1128 to 1112.

As described before with reference to Figure 12, each of the 3 bit USF fields are encoded in the block code circuits 140 and 141 into a respective set of 36 bits, using the block code described hereinabove. The 36 bits corresponding to the first user are designated by reference numeral 302 and the 36 bits corresponding to the second user are designated by reference numeral 304.

Each set of 78 Class II bits are unencoded as before, and are designated by the reference numerals 306 and 308.

Referring to Figure 19(c), there is shown the final encoded RLC/MAC block 310, which comprises the 1388 bits from Figure 19(b) designated by reference numeral 312, together with 4 stealing bits designated by reference numeral 314.

The down-link, in this embodiment, utilises the interleaving technique introduced in Figure 16 for interleaving the RLC/MAC blocks onto four bursts.

For this particular embodiment, there are two alternative techniques discussed hereinbelow for encoding on the up-link. As discussed hereinabove for the first embodiment of two speech frames from different users on the up-link, neither user has any information about the other, and therefore each speech frame from each user is encoded separately.

Figure 20 shows a first example of up-link coding. In Figure 20(a) there is shown an unencoded speech block 322 having a header designated by reference numeral 326 corresponding to that of Figure 1(b), a set of 191 Class I bits designated by reference numeral 328, and a set of 78 Class II bits designated by reference numeral 330.

The encoded speech block 322 is illustrated in Figure 20(b). In this example, the up-link header and the set of Class I bits are encoded together by a 2,1,7 convolution code, with puncturing of 28 bits.

The preferable puncturing scheme applied for Class Ib bits only is: b(110+ j*10) j=0,1... 27, where b(i) is the output of the 1/2 encoder. The total number of bits reduces from 402 to 374.

This results in a set of 374 bits as designated by reference numeral 332. As before the 78 Class II bits remain unencoded, and are designated by reference numeral 334.

Finally, the RLC/MAC block 324 for transmission is illustrated in Figure 20(c), and includes all the bits of Figure 20(b) designated by reference numeral 336 together with the 4 stealing bits designated by reference numeral 328.

The speech frame of the second user is similarly encoded, and results in an RLC/MAC block with the identical format to that of Figure 20(c).

**New Burst Structure**

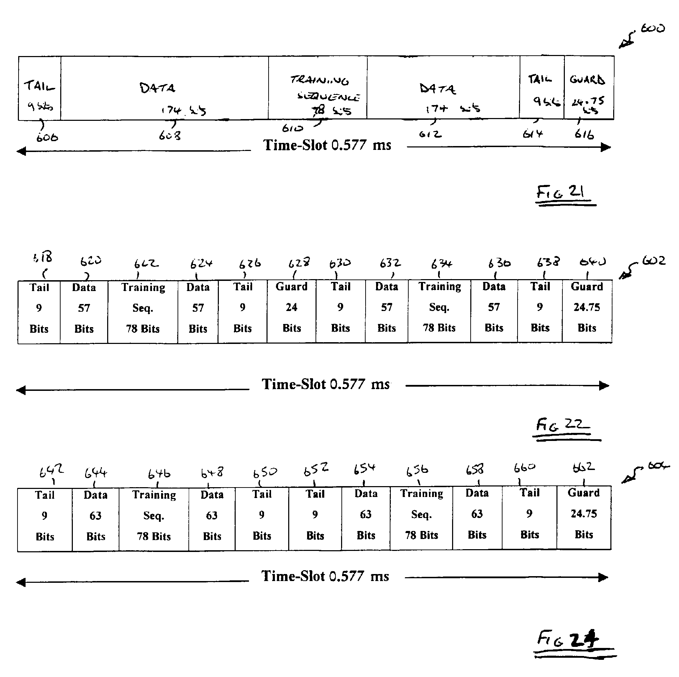

Figure 21 illustrates the conventional structure of a normal burst, and is identical to that shown and described previously with reference to Figure 15(b). However, in Figure 21 the number of bits in each portion of the burst corresponds to those which can be accommodated using 8 PSK modulation.

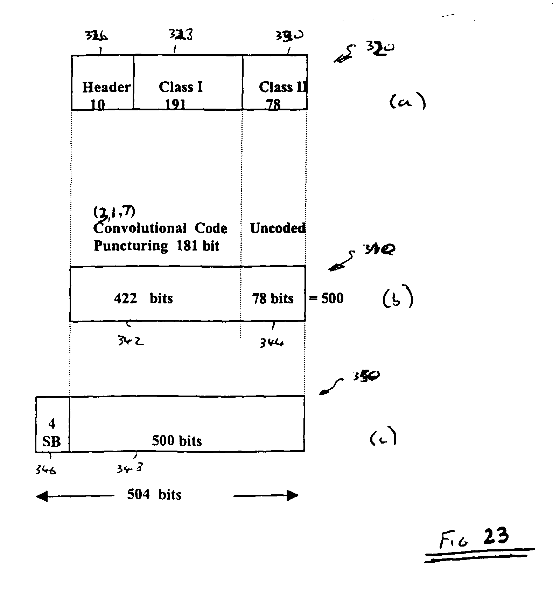

In the following a new burst structure based on the GSM/GPRS burst structure is proposed, which advantageously utilises the encoding technique for the up-link described with reference to Figure 20. Referring to Figure 22 there is shown a new burst structure 602, equivalent in length to the burst structure of Figure 21, but having tail portions 618, 626, 630 and 638, data portions 620, 624, 632, and 636, training sequences 622 and 634, and guard portions 628 and 640. The 456 bits of an encoded RLC/MAC block are interleaved over four half bursts and passed to the 8 PSK modulator.

Figure 23 shows a second example of up-link coding. In Figure 23(a) there is shown the unencoded speech block 320 of Figure 20(a).

The encoded speech block 340 is illustrated in Figure 23(b). In this example, the up-link header and the set of Class I bits are encoded together by a 3,1,7 convolution code, with puncturing of 181 bits.

This scheme uses (3,1,7) convolutional code rather than (2,1,7) convolutional code in previous section. This code has better coding gain but it produces more bits and lot puncturing has to be done.

Puncturing schemes are used:

b(43 + j*3) j=0,1... 44, where b(i) is the output of the 1/3 encoder.

b(193 + j*3) j=0,1... 135, where b(i) is the output of the 1/3 encoder.

This scheme will not puncture any header or CRC bits. The header is located at bits 1 to 30 and the CRC is located at bits 181 to 189.

This results in a set of 422 bits as designated by reference numeral 342. As before the 78 Class II bits remain unencoded, and are designated by reference numeral 344.

Finally, the RLC/MAC block 350 for transmission is illustrated in Figure 23(c), and includes all the bits of Figure 23(b) designated by reference numeral 348 together with the 4 stealing bits designated by reference numeral 346.

The speech frame of the second user is similarly encoded, and results in an RLC/MAC block with the identical format to that of Figure 23(c).

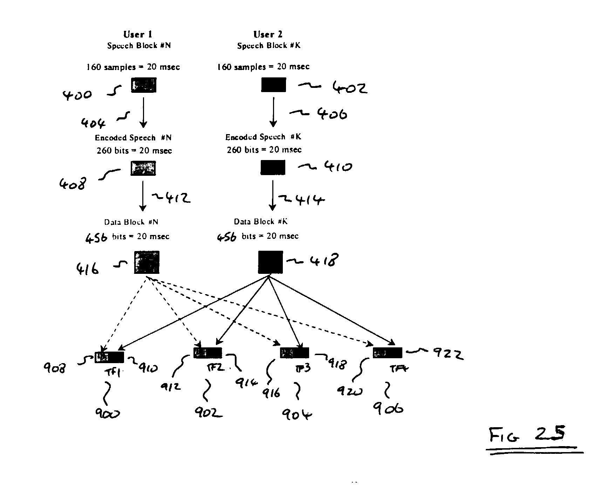

Referring to Figure 24 there is shown a further adaptation of the new burst structure 604 of Figure 22, again equivalent in length to the burst structure of Figure 21, but having tail portions 642, 650, 652 and 660, data portions 644, 648, 654, and 658, and training sequences 646 and 656. Thus the new burst structure of Figure 24 corresponds to the new burst structure of Figure 22, but without any guard bands. The 504 bits of the encoded RLC/MAC block in Figure 23 are interleaved over four half bursts and passed to the 8 PSK modulator.

Referring to Figure 25, there is illustrated an example of the encoding technique described above with reference to Figure 20, and the interleaving of the encoded RLC/MAC blocks into the new burst structure. The blocks 400, 408, and 416 in Figure 25 correspond to the same blocks as like reference numerals in Figure 17, and are associated with the first user. The blocks 402, 410, and 418 in Figure 25 similarly refer to the same blocks as like reference numerals in Figure 17, and are associated with the second user. In this example each of the blocks 416 and 418 comprises 456 bits corresponding to the 456 bits of Figure 20(c) for each of the first and second users.

As illustrated in Figure 25, each time frame includes a time-slot, which is assumed to be the third time slot TN3, which is partitioned into two time slots. Thus in a first time frame TF1 the third time slot 900 is divided into a first sub-time-slot 908 and a second sub-time-slot 910. In a second time frame TF2 the third time slot 902 is divided into a first sub-time-slot 912 and a second sub-time-slot 914. In a third time frame TF3 the third time slot 904 is divided into a first sub-time-slot 916 and a second sub-time-slot 918. In a fourth time frame TF4 the third time slot 906 is divided into a first sub-time-slot 920 and a second sub-time-slot 922. The other timeslots of each time frame are not shown for reasons of clarity in the Figure.

Thus, in accordance with this technique, a quarter of the 456 bits associated with the first user and represented by block 416 are transmitted in each of the four sub-time-slots 908, 912, 916, and 920. A quarter of the 456 bits associated with the second user and represented by block 418 are transmitted in each of the four sub-time-slots 910, 914, 918, and 922. The burst structure in each sub-time-slot corresponds to that of Figure 22.

In this way each physical channel formed by a conventional time slot becomes two physical channels. In this way an eight physical channel system may become a sixteen physical channel system.

Thus the original burst can be treated as two separate bursts. The information of a first user will occupy the first new burst (the top half of the original burst), and the information of the second user will occupy the second new burst (the bottom half of the original burst). Interleaving may be done by the conventional GSM/GPRS method, but with a new size of 456 for the burst structure of Figure 22, and a new size of 504 for the burst structure in Figure 24.

The partitioning of each time slot into a greater number of sub-time-slots is possible. Thus, in general, if a time slot normally supports a burst structure having n bits, each time slot may be partitioned into m sub-time-slots, bits being transmitted in each sub-time-slot in a corresponding burst structure having n/m bits.

In the general case, data from p users may be encoded such that each forms 1/p bits of an RLC/MAC block, wherein the encoded data is encoded into one of a p sub-time-slots.

Using the coding technique of Figure 20, the burst structure of Figure 24 may be similarly utilised in a system such as Figure 24. The guard band of the structure of Figure 22 may be eliminated where there is good synchronisation between the users.

Thus in a circuit or packet switched TDMA network, the number of physical channels may be doubled or further increased.

The interleaving technique for transmitting user data from different users in the same time slot, described hereinabove with reference to, for example, Figures 16 and 17 may be combined with the technique described hereinabove with reference to, for example, Figure 25, for partitioning a time-slot. In this way sub-time-slots may be partitioned.

**Four Speech Frames From Different Users**

A further embodiment is now described in which four speech frames all associated with different users are encoded into a single RLC/MAC block for transmission over EDGE. In this embodiment a standard GSM Half-rate encoder is utilised.

A standard GSM half-rate speech encoder generates a speech frame having 112 bits. 95 of these bits are Class I bits, of which 22 are Class Ia and 73 are Class Ib. The remaining 17 bits are Class II bits.

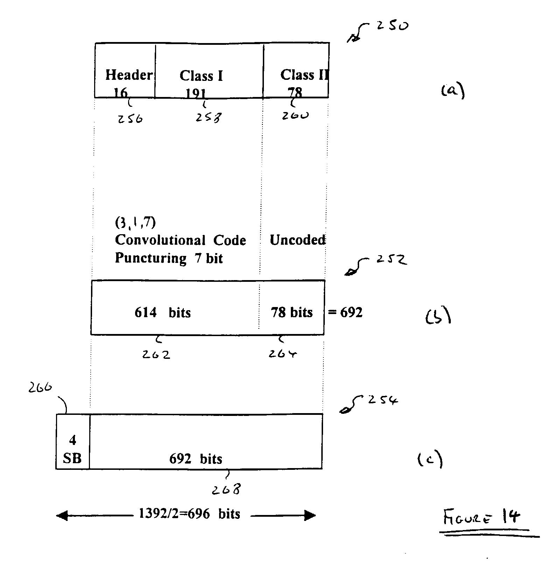

The ordering of the bits of a half-rate speech frame is shown in Figure 10(a). As can be seen, the speech frame 700 comprises the 73 Class Ib bits 702, followed by the 22 Class Ia bits 704, and followed by the 17 Class II bits 706.

In standard GSM, the Class Ia bits of the half-rate encoded speech frame 700 of Figure 10(a) are protected by three parity bits used for error detection. After addition of the three parity bits, a 115 bit half-rate encoded speech frame 708 is formed having the format shown in Figure 10(b). The three parity bits 710 are positioned between the Class Ia bits 704 and the Class II bits 706.

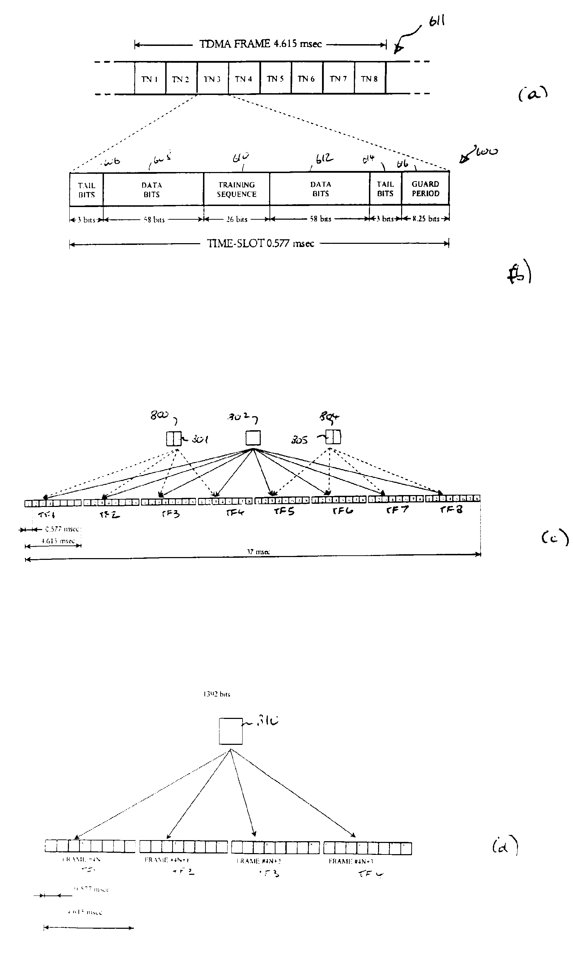

The circuitry for generating the half-rate encoded speech frame 708 of Figure 10(b) may be a standard GSM speech encoder, the implementation of which will be well within the scope of one skilled in the art. The circuitry for further encoding such speech frames into an EDGE RLC/MAC block will also be apparent to one skilled in the art having reference to the circuit of Figure 7 described hereinabove and the following additional description. For reasons of conciseness, a further modified implementation of such a circuit is not shown here. The necessary modifications to the circuit of Figure 7 will be apparent from the following description with further reference to Figures 10 and 11.

The encoding of the half-rate speech frame up to now is in conformance with speech encoding used in GSM. In this example the advantageous header structure for the clown-link of Figure 3(a) is again utilised.

Referring to Figure 10(b), there is shown one unencoded down-link speech frame 712 associated with one user. The 3 bits of the USF field of the header on line 138 are designated by numeral 720, the remaining 13 bits of the header are designated by reference numeral 722.

The three USF bits of the down-link header are block coded into 36 bits as designated by reference numeral 726 in Figure 10(d). For the encoding of the USF field in the header the 36,3 linear block code as suggested for EDGE data transmission and shown hereinabove in Table I is used.

The 95 Class I bits 702 and 704 of the first speech frame are combined with the remaining 13 bits of the header 722 (i.e. all fields except the 3 USF bits) and the 3 CRC bits 710 in a convolutional encoder circuit. A 3,1,7 convolutional code is utilised as described above to generate 351 bits designated by reference numeral 724 in Figure 10(c).

The 3,1,7 convolutional code described hereinabove with reference to Figure 7 is again used, having the generator polynomials of the rate 3,1,7 convolutional code as follows:

$$G_0(D) = 1 + D^2 + D^3 + D^5 + D^6$$

$$G_1(D) = 1 + D + D^2 + D^3 + D^4 + D^6$$

$$G_2(D) = 1 + D + D^4 + D^6$$

The output of the convolutional encoder comprises 351 bits $[b(1), ..., b(351)]$. In order to fulfil the length requirements of the EDGE RLC/MAC block, puncturing must be used at this stage. More specifically, 58 of the 351 bits 724 are punctured to result in a set of 293 encoded bits designated by reference numeral 728 in Figure 10(d). The punctured bits are the following:

$b(40+5 \cdot i) = 0$ , $i = 0,1,...,56$

$b(324) = 0$

Careful examination of the punctured bits shows that none of the critical CRC and header bits are punctured.

The 17 Class II bits are unencoded and are designated by reference numeral 730 in Figure 10(d).

Referring to Figure 10(e), the completed RLC/MAC block 742 for the down-link is illustrated, and corresponds to the format shown in Figure 10(d) with the addition of 8 stealing bits designated by reference numeral 734 and encoded second, third, and fourth speech frames designated 736, 738, and 740.

Each of the second, third, and fourth half-encoded speech frames from the same user are encoded in an identical manner to that described in relation to the first speech frame with reference to Figures 10(a) to 10(d). In this embodiment all speech frames are encoded with their headers, since with the technique used - puncturing 58 bits per frame - this results in a length of bits (with the 8 stealing bits) equivalent in length to an EDGE RLC/MAC block.

At the receiver end, prior to decoding, the punctured bits are replaced with zeros. The punctured block consists of 293 bits, which are combined with the 36 encoded USF bits and the 17 uncoded Class II bits to form the first block of the transmitted RLC/MAC block. The same procedure is followed for the rest three speech frames. At the end 8 stealing bits are inserted. After the RLC/MAC block is formed, it is forwarded to the modulator and interleaver. Interleaving over four bursts is preferably used in the downlink as in EDGE data transmission.

Because all the headers are encoded, this same technique may be used for encoding four speech frames which are not all associated with the same user.

Whilst the above description has been in relation to the transmission of four speech frames in the same RLC/MAC block in the down-link, and Figure 8 represents a summary of the channel coding for transmission of four speech frames in one RLC/MAC block for down-link transmission, similar techniques apply in the up-link. Figure 11 illustrates the channel coding principle applied for transmission of four speech frames in one RLC/MAC block for up-link transmission.

Referring to Figure 11(b), there is again shown one unencoded down-link speech frame 713 associated with one user. The 16 bit header is designated by numeral 723.

The 95 Class I bits 702 and 704 of the first speech frame are combined with the 16 bits of the header 723 and the 3 CRC bits 710 in a convolutional encoder circuit. A 3,1,7 convolution code is again utilised to generate 360 bits (including 6 tail bits) designated by reference numeral 750 in Figure 11(c).

The output of the convolutional encoder comprises 360 bits $[b(1), ..., b(360)]$. In order to fulfil the length requirements of the EDGE RLC/MAC block, puncturing must again be used at this stage. 31 of the 360 bits 750 are punctured to result in a set of 329 encoded bits designated by reference numeral 756 in Figure 10(d). The punctured bits are the following:

$b(53+9 \cdot i) = 0$, $i = 0,1...,29$

$b(324) = 0$

The 17 Class II bits 706 are unencoded. The encoded frame 752 is then allocated two stealing bits 766 and multiplexed into an RLC/MAC block with the three other frames. Each of the three other encoded frames 760, 762, and 764 is associated with two stealing bits 768, 770, and 772 respectively.

As will be discussed later herein, if four encoded speech frames are from different users, in a preferable embodiment they may share a common TDMA time slot.

Each encoded frame is preferably transmitted in one burst. Since four different blocks may come from four different users in the uplink, it is not possible to interleave the RLC/MAC block over four bursts. Alternatively block interleaving is used for each block in each burst. Specifically, the 346 bits are inserted in a 18x20 rectangular matrix column by column. This matrix has 360 elements and therefore the last 14 elements are empty. The bits are read out row by row. This interleaving scheme achieves a minimum distance of 18 between consecutive bits. At the receiver end the inverse procedure (de-interleaving) is followed.

**Claims**

1. A transmitter including a data encoder for encoding data packets in fixed length EDGE blocks, each data packet including a data header and a data payload, wherein said transmitter additionally includes a speech encoder for encoding speech packets each including a speech header and a payload comprising a speech frame, wherein the speech packets are encoded into blocks of equal length to the EDGE data blocks, the speech header being reduced relative to the data header.

2. The transmitter of claim 1 in which the speech header includes temporary flow identity and final block indicator fields.

3. The transmitter of claim 2 in which the speech header additionally includes error-checking information associated with the header for detecting errors in the speech header at the receiver.

4. The transmitter of claim 3 in which the error-checking information allows for correction of errors in the speech header at the receiver.

5. The transmitter of any one of claims 2 to 4 in a wireless network wherein in the down-link the speech header additionally includes an up-link state flag.

6. The transmitter of any one of claims 2 to 4 in a wireless network wherein in the up-link the speech header additionally includes a speech flag.

7. The transmitter of any one of claims 1 to 6 further including a full-rate speech encoder for generating the speech frames.

8. The transmitter of claim 7 in which at least two speech frames are encoded into a block.

9. The transmitter of claim 8 wherein the at least two speech frames are encoded into a block without puncturing.

10. The transmitter of any one of claims 1 to 6 further including a half-rate speech encoder for generating the speech frames.

11. The transmitter of claim 10 in which at least four speech frames are encoded into a block.

12. The transmitter of any one of claims 1 to 10 in which the fixed length blocks are EDGE RLC/MAC blocks.

13. A packet switched network including the transmitter of any one of claims 1 to 11.

14. In a packet switched radio network for encoding data packets including a data header and a data payload into fixed length EDGE blocks, a method of encoding speech frames comprising: generating a speech header for each speech frame; generating a speech packet for each speech frame including the speech header and a payload comprising the speech frame; encoding each speech packet into a block of equal length to the EDGE data block, wherein the speech header is reduced relative to the data header.

15. The method of claim 14 further comprising the step of generating each speech packet using a full-rate speech encoder.

**16.** The method of claim 14 further comprising the step of generating each speech packet using a half-rate encoder.

**17.** The method of any one of claims 14 to 16 in which at least two speech packets are encoded into a block.

Fig. 2

| USF1 (3 bits) | TFI for user 1 ( 7 bits) | FBI1(1 bit) |
|---|---|---|

4      6      8

FIG 1(a)

10

| TFI (7its) | SF (2 bit) | FBI (1 bit) |
|---|---|---|

12      14      16

FIG 1(b)

4

| 8 | 7 | 6 | 5 | 4 | 3 | 2 | 1 |
|---|---|---|---|---|---|---|---|

20

| USF (3 bits) | TFI (7 bits) |
|---|---|
| TFI | FBI (1bt) | CRC (5 bits) |

6      8      18

FIG 2(a)

12

| 8 | 7 | 6 | 5 | 4 | 3 | 2 | 1 |
|---|---|---|---|---|---|---|---|

24

| TFI (7 bits) | SF (2 bits) |
|---|---|
| SF | FBI (1bt) | CRC (6 bits) |

14      16      22

FIG 2(b)

4

| 8 | 7 | 6 | 5 | 4 | 3 | 2 | 1 |
|---|---|---|---|---|---|---|---|

26

| USF (3 bits) | TFI (7 bits) |
|---|---|
| TFI | CCS (5 bits) | FBI (1bt) |

6      28      8

FIG 3(a)

12

| 8 | 7 | 6 | 5 | 4 | 3 | 2 | 1 |
|---|---|---|---|---|---|---|---|

30

| TFI (7 bits) | SF (2 bits) |
|---|---|
| SF | CCS (6 bits) | FBI (1 bit) |

14      32      16

FIG 3(b)

34 36 38 40

| C/I (dB) | Dropped Headers Without Error Detection | Dropped Headers With Error Correction | Improvement (%) |
|---|---|---|---|
| 6 | 1429 | 1281 | 10.36 |
| 7 | 1028 | 884 | 14.01 |
| 8 | 700 | 591 | 15.57 |
| 9 | 454 | 401 | 11.67 |
| 10 | 278 | 243 | 12.59 |
| 11 | 180 | 140 | 22.22 |
| 12 | 101 | 87 | 13.86 |
| 13 | 59 | 47 | 20.34 |

FIG 4(a)

34 36 33 40

| C/I (dB) | Dropped Headers Without Error Detection | Dropped Headers With Error Correction | Improvement (%) |
|---|---|---|---|
| 6 | 1453 | 1258 | 13.42 |
| 7 | 1087 | 930 | 14.44 |
| 8 | 715 | 608 | 14.96 |
| 9 | 498 | 402 | 19.27 |
| 10 | 285 | 230 | 19.29 |
| 11 | 199 | 157 | 21.10 |
| 12 | 98 | 74 | 24.49 |
| 13 | 49 | 39 | 20.41 |

FIG 4(b)

EP 1 059 776 A1

CONTROL CIRCUIT ～50

DS1 Generator Circuit ～52

TH1 Generator Circuit ～54

FBI Generator Circuit ～56

CYCLIC CODE GENERATOR CIRCUIT ～53

74

76

73

~80

OUTPUT CIRCUIT ～60

～68

FIG. 5

INPUT CIRCUIT ～62

82

84

CYCLIC CODE GENERATOR CIRCUIT ～64

70

86

ERROR CORRECTION & DETECTION CIRCUIT ～66

FIG. 6

Fig 7

(a)

(b) ≈ 1377

(c)

FIG 8

| | 1st speech frame | | 2nd speech frame | |
|---|---|---|---|---|
| Header 16 bits | Class I 191 bits | Class II 78 bits | Class I 191 bits | Class II 78 bits |

30    182    184    186    188

(a)

| (3,1,7) Convolutional Code | Uncoded | (3,1,7) Convolutional Code | Uncoded |
|---|---|---|---|

| 621 bits | 78 bits | 573 bits | 78 bits |
|---|---|---|---|

190    192    194    196

(b)

| 4 SB | 1350 bits | 38 Spare bits |
|---|---|---|

200    202

198

←――――――――――――――― 1392 bits ―――――――――――――――→

(c)

FIG 9

26

Half Rate Speech Frame

| Class Ib 73 bits | Class Ia 22 bits | Class II 17 bits |
|---|---|---|

(a)

| USF 3 bits | Header 13 bits | Class Ib 73 bits | Class Ia 22 bits | CRC 3 bits | Class II 17 bits |
|---|---|---|---|---|---|

(b)

| (36,3) Block Code | (3,1,7) Convolutional Code + 6 Tail bits | | | Uncoded |
|---|---|---|---|---|
| | 351 bits | | | |
| | 58 bits puncturing | | | |

(c)

| USF 36 bits | 293 bits | 17 bits |
|---|---|---|

(d)

| | 1st speech frame | 2nd speech frame | 3rd speech frame | 4th speech frame |
|---|---|---|---|---|
| 8 SB | 346 bits | 346 bits | 346 bits | 346 bits |

(e)

Figure 5. Channel coding for transmission of four speech frames in one RLC/MAC block – Downlink.

FIG 10

Figure 6. Channel coding for transmission of four speech frames in one RLC/MAC block – Uplink.

FIG 11

EP 1 059 776 A1

FIG 12

29

213

212  214  216  218

221

220  222  224  226

210

| USF1 3 | Header 13 | Class I 191 | Class II 78 | USF2 3 | Header 13 | Class I 191 | Class II 78 |

(a)

| (36,3) Block Code | (3,1,7) Convolutional Code Puncturing 34 bits | Uncoded | (36,3) Block Code | (3,1,7) Convolutional Code Puncturing 34 bits | Uncoded |

228

| 36 bits | 578 bits | 78 bits | 36 bits | 578 bits | 78 bits |

= 1384

(b)

238  230  232  240  234  236

242

| 8 SB | 1384 bits |

(c)

← 1392 bits →

244

FIGURE 13

Figure 14

| Header 16 | Class I 191 | Class II 78 |
|---|---|---|

256 · 258 · 260 · (a) · 250

(3,1,7) Convolutional Code Puncturing 7 bit — Uncoded

| 614 bits | 78 bits |
|---|---|

= 692 · (b) · 252

262 · 264

| 4 SB | 692 bits |
|---|---|

266 · 254 · (c)

268

◄——— 1392/2=696 bits ———►

TDMA FRAME 4.615 msec

611

| TN 1 | TN 2 | TN 3 | TN 4 | TN 5 | TN 6 | TN 7 | TN 8 |
|------|------|------|------|------|------|------|------|

(a)

600

606  605  610  612  614  66

| TAIL BITS | DATA BITS | TRAINING SEQUENCE | DATA BITS | TAIL BITS | GUARD PERIOD |
|-----------|-----------|-------------------|-----------|-----------|--------------|
| 3 bits | 58 bits | 26 bits | 58 bits | 3 bits | 8.25 bits |

TIME-SLOT 0.577 msec

(b)

800   802   804
301      305

TF1    TF2    TF3    TF4    TF5    TF6    TF7    TF8

0.577 msec
4.615 msec
37 msec

(c)

1392 bits

310

FRAME #4N    FRAME #4N+1    FRAME #4N+2    FRAME #4N+3
TF1            TF2            TF3            TF4

0.577 msec
4.615 msec

(d)

32

User 1
Speech Block #N

160 samples = 20 msec

400

~ 404

Encoded Speech #N
260 bits = 20 msec

408

~ 412

Data Block #N
696 bits = 20 msec

416

User 2
Speech Block #K

160 samples = 20 msec

~ 402

~ 406

Encoded Speech #K
260 bits = 20 msec

~ 410

~ 414

Data Block #K
696 bits = 20 msec

~ 418

| 1 | 2 | 3 | 4 | 5 | 6 | 7 | x | | 1 | 2 | 3 | 4 | 5 | 6 | 7 | x | | 1 | 2 | 3 | 4 | 5 | 6 | 7 | x | | 1 | 2 | 3 | 4 | 5 | 6 | 7 | x |

TF1            TF2            TF3            TF4

0.577 msec

4.615 msec

FIG 16

User 1
Speech Block #N

160 samples = 20 msec

400

404

Encoded Speech #N
260 bits = 20 msec

408

412

Data Block #N
692 bits = 20 msec

416

User 2
Speech Block #K

160 samples = 20 msec

402

406

Encoded Speech #K
260 bits = 20 msec

410

414

Data Block #K
692 bits = 20 msec

418

FRAME #4N        FRAME #4N+1        FRAME #4N+2        FRAME #4N+3

0.577 msec

4.615 msec

FIG 17

EP 1 059 776 A1

FIG 18

35

272 234 236 288 290 292 294 296 &r 230

| USF1, USF2 | | HDR1 HDR2 | | Class I (1) | Class I (2) | Class II (1) | Class II (2) |
|---|---|---|---|---|---|---|---|
| 3 | 3 | | | 185 | 191 | 78 | 78 |

(a)

| (36,3) Block Code | | (3,1,7) Convolutional Code Puncturing 16 bit | | Uncoded | Uncoded |
|---|---|---|---|---|---|
| 36 bits | + 36 bits | 1112 bits | | 78 bits | 78 bits |

298 = 1388 (b)

302 304 300 306 308

310

312

| 4 SB | 1388 bits |
|---|---|

314

←————— 1392 bits ——————→

(c)

FIG 19

_320_

(a)

| Header 10 | Class I 191 | Class II 78 |
|---|---|---|

_326_     _323_     _330_

$(2,1,7)$
Convolutional Code
Puncturing 28 bit     Uncoded

_322_

(b)

| 374 bits | 78 bits | = 452 |
|---|---|---|

_332_     _334_

_350_     _336_     _324_

(c)

| 4 SB | 452 bits |
|---|---|

◄─────── 456 bits ───────►

FIG 20

600

| TAIL 9 bits | DATA 174 bits | TRAINING SEQUENCE 78 bits | DATA 174 bits | TAIL 9 bits | GUARD 24.75 bits |
|---|---|---|---|---|---|

606      608      610      612      614      616

← ———————— Time-Slot 0.577 ms ———————— →

FIG 21

618  620  622  624  626  628  630  632  634  636  638  640    602

| Tail 9 Bits | Data 57 Bits | Training Seq. 78 Bits | Data 57 Bits | Tail 9 Bits | Guard 24 Bits | Tail 9 Bits | Data 57 Bits | Training Seq. 78 Bits | Data 57 Bits | Tail 9 Bits | Guard 24.75 Bits |
|---|---|---|---|---|---|---|---|---|---|---|---|

← ———————— Time-Slot 0.577 ms ———————— →

FIG 22

642  644  646  648  650  652  654  656  658  660  662    604

| Tail 9 Bits | Data 63 Bits | Training Seq. 78 Bits | Data 63 Bits | Tail 9 Bits | Tail 9 Bits | Data 63 Bits | Training Seq. 78 Bits | Data 63 Bits | Tail 9 Bits | Guard 24.75 Bits |
|---|---|---|---|---|---|---|---|---|---|---|

← ———————— Time-Slot 0.577 ms ———————— →

FIG 24

Header
10 — 316

Class I
191 — 313

Class II
78 — 330

320

(a)

(3,1,7)
Convolutional Code
Puncturing 181 bit

Uncoded

422 bits | 78 bits | = 500

342 | 344

340

(b)

350

4
SB — 346 | 500 bits

343

(c)

◄──── 504 bits ────►

Fig 23

**User 1**
Speech Block #N

160 samples = 20 msec

400

404

Encoded Speech #N
260 bits = 20 msec

408

~412

Data Block #N
456 bits = 20 msec

416

**User 2**
Speech Block #K

160 samples = 20 msec

~402

~406

Encoded Speech #K
260 bits = 20 msec

~410

~414

Data Block #K
456 bits = 20 msec

~418

908        TF1        ~910
912        TF2        914        916
TF3        ~918        920
TF4        ~922

900        902        904        906

FIG 25

## EUROPEAN SEARCH REPORT

**European Patent Office**

Application Number

EP 99 30 5107

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WANG J ET AL: "WIRELESS VOICE-OVER-IP AND IMPLICATIONS FOR THIRD-GENERATION NETWORK DESIGN" BELL LABS TECHNICAL JOURNAL,US,BELL LABORATORIES, vol. 3, no. 3, page 79-97 XP000782375 ISSN: 1089-7089 * abstract * * page 80, left-hand column, line 1 - page 81, left-hand column, line 14 * * page 83, right-hand column, line 11 - page 84, right-hand column, line 13 * * page 85, right-hand column, line 22 - page 91, right-hand column, line 13 * * figures 5,6,8,9 * | 1,7,10, 12-16 | H04L12/56 H04L29/06 H04Q7/22 |
| A | | 2,8,11, 17 | |
| Y | YVONNE DIAZ, SCOTT HORNE: "PacketGSM Technology from Bell Labs Puts Voice and Data on Single Wireless Net" BELL-LABS.COM, 'Online! May 1999 (1999-05), pages 1-2, XP002126278 Retrieved from the Internet: <URL:http://www-out.bell-labs.com/news/1999/may/18/1.html> 'retrieved on 1999-12-17! * the whole document * | 1,7,10, 12-16 | TECHNICAL FIELDS SEARCHED (Int.Cl.7) H04L H04Q |
| A | | 2,8,11, 17 | |

-/--

The present search report has been drawn up for all claims

| Place of search | Date of completion of the search | Examiner |
|---|---|---|
| THE HAGUE | 20 December 1999 | Vaskimo, K |

**European Patent Office**

## EUROPEAN SEARCH REPORT

Application Number

EP 99 30 5107

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | "EDGE to Bring Still Higher Data Throughput" NOKIA DISCOVERY ONLINE, 'Online! vol. 47, 1998, page 30 XP002126251 Retrieved from the Internet: <URL:wysiwyg://36/http://www.nokia.c...nes /discovery/vol47/page30.html> 'retrieved on 1999-12-20! * page 1 * | 1,7,10, 12-16 | |
| A | | 2,8,11, 17 | |
| Y | SAMUEL LEVENSON: "Pulling The Wires From VoIP" TMCNET, 'Online! April 1999 (1999-04), pages 1-3, XP002126252 Retrieved from the Internet: <URL:http://www.tmcnet.com/articles/itmag/ 0499/0499mot.htm> 'retrieved on 1999-12-20! * the whole document * | 1,7,10, 12-16 | |
| A | | 2,8,11, 17 | TECHNICAL FIELDS SEARCHED (Int.Cl.7) |
| Y | "Universal Wireless Communications Consortium and North American GSM Alliance Sign Historic TDMA-GSM Interoperability Agreement" GSM NEWS,9 February 1999 (1999-02-09), pages 1-2, XP002126253 * the whole document * | 1,7,10, 12-16 | |
| A | | 2,8,11, 17 | |

-/--

The present search report has been drawn up for all claims

| Place of search | Date of completion of the search | Examiner |
|---|---|---|
| THE HAGUE | 20 December 1999 | Vaskimo, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 059 776 A1

| | European Patent Office | EUROPEAN SEARCH REPORT | Application Number EP 99 30 5107 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HOSHI T ET AL: "VOICE STREAM MULTIPLEXING BETWEEN IP TELEPHONY GATEWAYS" IEICE TRANSACTIONS ON INFORMATION AND SYSTEMS,JP,INSTITUTE OF ELECTRONICS INFORMATION AND COMM. ENG. TOKYO, vol. E82-D, no. 4, page 838-845 XP000832566 ISSN: 0916-8532 * abstract * | 1,14 | |
| A | "Nokia's vision for a service platform supporting high-speed data applications" ENHANCED DATA RATES FOR GSM EVOLUTION EDGE; NOKIA'S WHITE PAPER,1999, pages 1-8, XP002126254 * page 4, right-hand column * | | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 20 December 1999 | Vaskimo, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

43